# EUROPÄISCHE PATENTSCHRIFT

(11) **EP 3 138 685 B1**
(45) Veröffentlichungstag und Bekanntmachung des Hinweises auf die Patenterteilung: **27.02.2019**
(21) Anmeldenummer: 16184318.0
(22) Anmeldetag: 16.08.2016
(51) Int. Cl.: B29C 70/86, B29C 35/02, C08G 18/64, C08J 5/24, C08G 18/79, C08G 18/42, C08G 59/42, C08L 75/04, B29L 31/00, B29C 65/48, B29K 105/24, B29C 65/02, C08G 59/40

(54) **HYBRIDBAUTEIL MIT EINER LOKALEN VERSTEIFUNG AUS EINEM ZWEISTUFIG VERNETZTEN, AUF POLYURETHAN BASIERENDEN FASERVERBUNDWERKSTOFF**
HYBRID COMPONENT WITH A LOCAL REINFORCEMENT MADE OF A TWO STAGE CROSSLINKED COMPOSITE MATERIAL BASED ON POLYURETHANE FIBRE
COMPOSANT HYBRIDE DOTE D'UN RENFORT LOCAL CONSTITUE D'UN MATERIAU EN FIBRES COMPOSITES A BASE DE POLYURETHANE, RETICULE EN DEUX ETAPES

(30) Priorität: 03.09.2015 EP 15183660
(43) Veröffentlichungstag der Anmeldung: 08.03.2017
(73) Patentinhaber: Evonik Degussa GmbH, 45128 Essen (DE)
(72) Erfinder: Diehl, Christina, 42555 Velbert (DE); Schmidt, Marina-Elena, 45892 Gelsenkirchen (DE); Gutmann, Tobias, 46286 Dorsten (DE); Stapperfenne, Uwe, 42489 Wülfrath (DE); Reemers, Sandra, 48151 Münster (DE); Ickert, Leif, 40235 Düsseldorf (DE)

(56) Entgegenhaltungen:
- EP-A1- 0 552 370
- EP-A1- 0 576 393
- DE-A1-102011 006 163
- DE-A1-102011 076 546
- US-A1- 2015 218 375

## Beschreibung

Die Erfindung betrifft ein Hybridbauteil mit einer lokalen Versteifung aus einem zweistufig vernetzten, auf Polyurethan basierenden Faserverbundwerkstoff; genauer gesagt, befasst sich die Erfindung mit der Herstellung eines solchen Hybridbauteils.

Unter einem Hybridbauteil ist ein Bauteil einer Maschine, eines Land-, Luft-, Raum-, oder Wasser-Fahrzeugs, eines Apparats, einer Anlage oder eines Geräts zu verstehen, welches aus unterschiedlichen, miteinander unlösbar verbundenen Werkstoffen aufgebaut ist. Ein Hybridbauteil erfüllt im Wesentlichen eine mechanische Funktion, meist als tragendes Strukturbauteil; es können ihm aber auch weitere, nicht mechanische Funktionen zugeordnet sein, wie etwa elektrische, thermische, akustische oder optische. Zu diesem Zwecke werden die eingesetzten Werkstoffe nicht nur mechanisch, sondern beispielsweise auch hinsichtlich ihrer optischen und/oder elektrischen Eigenschaften genutzt.

In einem Hybridbauteil werden aus chemischer Sicht sehr unterschiedliche Materialien kombiniert, um die sehr unterschiedlichen physikalischen Eigenschaften dieser Werkstoffe synergetisch zu nutzen. Das hier vorgestellten Hybridbauteil besteht in erster Näherung aus zwei Werkstoffen, nämlich einerseits aus einem metallischen Werkstoff und anderseits aus einem Faserverbundwerkstoff.

Bei dem metallischen Werkstoff handelt es sich nicht um ein chemisch reines Metall, sondern vielmehr um eine Legierung eines Metalls mit weiteren Metallen oder Nichtmetallen. In erster Linie kommt Stahl als metallischer Werkstoff in Betracht, darüber hinaus auch Aluminiumlegierungen.

Der Faserverbundwerkstoff ist wiederum ein heterogenes Material, welches eine Matrix aus einem duroplastischen Polyurethan umfasst, in welchem Fasern wie beispielsweise Kohlenstofffaser, Aramidfaser oder Glasfaser eingebettet sind. Matrix und Fasern sind unlösbar miteinander verbunden. Die Fasern übernehmen innerhalb des Faserverbundwerkstoffes die Kraftübertragung, die Matrix leitet die äußeren Kräfte in die Fasern ein und schützt die Fasern vor Beschädigung. Die Matrix ist auch unlösbar mit dem Metall verbunden. "Unlösbar" bedeutet in diesem Zusammenhang, dass die Matrix im bestimmungsgemäßen Gebrauch unbeweglich gegenüber dem Metall an diesem anhaftet. Wenn es zu einer Ablösung des Faserverbundmaterials von dem Metall kommt, ist das Hybridbauteil zerstört.

Das Hybridbauteil besteht mithin mindestens aus dem metallischen Werkstoff, aus Polyurethan und dem Fasermaterial.

Ein wichtiger Aspekt des hier vorgestellten Hybridbauteils ist, dass Metall und Faserverbundmaterial nicht zu gleichen Teilen in dem Hybridbauteil verbaut sind, sondern dass ein metallischer Grundkörper die wesentliche geometrische Gestalt des Hybridbauteils festlegt, währenddessen der Faserverbundwerkstoff als gezielt angeordnete lokale Versteifung des Grundkörpers dient. Der dahinter liegende Gedanke besteht darin, in dem Hybridbauteil möglichst viel preiswertes Metall in dünnen Wandstärken zu verbauen. Nur an den Stellen, an denen der metallische Grundkörper aufgrund seiner geringen Wandstärke die im bestimmungsgemäßen Gebrauch zu erwartenden mechanischen Belastungen nicht ertragen könnte, wird der metallische Grundkörper selektiv mit einem hochfestem Faserverbundwerkstoff ertüchtigt. Innerhalb des Hybridbauteils wird also konstruktiver Leichtbau betrieben, um das Gewicht und zugleich die Werkstoffkosten des Hybridbauteils zu minimieren.

Da sich der Leichtbau stets am späteren Lastfall orientiert, kann die tatsächliche Größe der Versteifung im Verhältnis zu dem Grundkörper nicht pauschal angegeben werden. Auch die Gestalt der Versteifung orientiert sich an der Belastung; sie kann punktförmig wie ein Knoten ausgeführt sein oder linienförmig wie eine Rippe. Entscheidend ist jedoch, dass der Faserverbundwerkstoff im Vergleich zum metallischen Grundkörper nur einen lokal begrenzten Bereich des Hybridbauteils einnimmt. Folglich wird die konstruktiv maßgebliche Gestalt des Hybridbauteils - also die Außenabmessungen und die Anschlussmaße zu benachbarten Bauteilen - durch die Geometrie des metallischen Grundkörpers vorgegeben.

Insoweit unterscheidet sich das hier vorgestellte Hybridbauteil von Sandwiches, bei denen eine oder mehrere Schichten Metallblech mit einer oder mehreren Schichten aus Faserverbundmaterial kombiniert sind: Innerhalb des Sandwiches nehmen nämlich sowohl die Blechlagen als auch die Lagen aus Faserverbundmaterial dieselbe Fläche ein wie das gesamte Sandwich, sodass von einer lokalen Versteifung der Bleche durch das Faserverbundmaterial nicht die Rede sein kann. Vielmehr ist in einem solchen Sandwich das Blech global mit Faserverbundmaterial versteift.

Technisch interessante Einsatzgebiete der hier besprochenen Hybridbauteile finden sich überall dort, wo es auf geringe Gewichte, großen Steifigkeiten und geringe Materialkosten ankommt. Zudem sollten die im Betrieb zu erwartenden mechanischen Belastungen, die auf das Hybridbauteil einwirken, hinreichend zuverlässig vorhersagbar sein, um dessen Sicherheit garantieren zu können. Besonders interessant erscheint es, solche Hybridbauteile in Produkten anbieten zu können, die in große Stückzahlen produziert werden und deren Abnehmer besonders preissensitiv sind.

Ein besonders relevanter Einsatzbereich vorliegender Hybridbauteile sind mithin Bestandteile der Karosserien von Automobilen und anderen Landfahrzeugen, wie etwa B-Säulen, Querträger, Längsträger oder Bodengruppen. Aber auch deren Verkleidungsteile, die in klassischer Blechbauweise nicht zu den tragenden Strukturbauteilen gehören, wie etwa Motorhauben, Dächer oder Türen, kommen als Hybridbauteil in Betracht. Darüber hinaus können Strukturbauteile von Flugzeugen in der hier beschriebenen Weise als Hybridbauteil ausgeführt werden.

Die hier dargestellten Hybridbauteile sind grundsätzlich dafür bestimmt, herkömmliche, rein metallische Bauteile zu substituieren. Dies gelingt in vielen Einbausituationen mit einem auf einem Metallwerkstoff basierenden, lokal faserverstärkten Hybridbauteil besser als mit einem metallfreien Faserverbundbauteil, da die Krafteinleitung über die Matrix in die Fasern deutlich aufwändiger zu realisieren ist als in Metall. In der Großserienmontage können metallfreie Faserverbundbauteile nur unter hohen Kosten mit metallischen Bauteilen gefügt werden. Bei einem metall-basierten Hybridbauteil hingegen erfolgt die Krafteinleitung gern über das Metall, welches sich mit bewährter Technologie (Schrauben, Nieten, Schweißen) an benachbarte metallische Bauteile fügen lässt. Der technologisch anspruchsvolle Fügevorgang zwischen Metall und Matrix wird mithin von der Montage in die Fertigung des Hybridbauteils verlagert, wo er besser beherrschbar ist.

Hybridbauteile mit einem metallischen Grundkörper und einer lokalen Versteifung aus einem Faserverbundmaterial sind aus US2013106138A1 und aus US2013108878A1 bekannt. Hier wird jeweils eher konzeptuell ein Verfahren beschrieben, bei dem ein metallischer Grundkörper bzw. ein Halbzeug desselben mit einem Verstärkungspatch aus einem Prepreg (das ist ein vorimprägniertes Faser/Harz-Gemisch) versehen und auch umgeformt wird. Allerdings wird auf die Chemie des später die Matrix bildenden Harzes nicht näher eingegangen; die Verwendung des Begriffes "Harz" lässt ein auf Epoxid basiertes System vermuten. Es wird erwähnt, dass zum Anheften des Prepregs an dem Metall ein Klebstoff erforderlich ist oder das Harz mit haftungsteigernden Zuschlagsstoffen zu modifizieren sei.

Aus fertigungstechnischer Sicht wäre es interessant zu erfahren, wie gut das dort verwendete "Harz" unter Verwendung des Zuschlagstoffes oder des Klebstoffes an dem Metall haftet - insbesondere dann, wenn das metallische Halbzeug mit dem anhaftenden Verstärkungspatch noch ungeformt werden soll. Nach der Erfahrung der Anmelderin erreichen handelsübliche Prepregs aus Epoxidharz lediglich ein geringes Haftungsniveau auf Metall, sodass zu befürchten ist, dass sich die Prepregs von dem Blech wieder ablösen, wenn dieses vor Vernetzung des Epoxidharzes umgeformt wird. Folglich erscheint die Verwendung eines zusätzlichen Klebstoffes oder haftungssteigernder Zuschlagsstoffe unumgänglich, was das Platzieren des unvernetzten Verstärkungspatch an dem Metallteil verkompliziert und damit teuer macht. Im vernetzten Zustand ist an eine Umformung des Blechs mit anhaftendem Verstärkungspatch gar nicht mehr zu denken, da sich dann das Epoxidharz bereits duroplastisch verhält und nicht mehr für eine zerstörungsfreie Umformung erforderliche Duktilität aufweist.

Darüber hinaus sind Prepregs auf Basis von Epoxidharzen bei Raumtemperatur generell nicht lagerbeständig und müssen deswegen vorder Verarbeitung aufwendig gekühlt werden, damit sie nicht zur Unzeit vernetzen. Die schlechte Lagerbeständigkeit erfordert die strenge Einhaltung von Verarbeitungszeitfenstern, was die Produktion der Hybridbauteile unflexibel macht.

Lagerstabile Prepregs auf Basis von Polyurethan sind grundsätzlich aus US8455090B2 bzw. aus US2014087613A1 bekannt. In einem zweistufigen Vernetzungsvorgang werden diese Prepregs erst in einen thermoplastischen Zustand vorvernetzt und anschließend in einen duroplastischen Zustand endvernetzt. Dazwischen sind sie bei Raumtemperatur lagerstabil. Diese Prepregs sind aber nicht für den Einsatz in Hybridbauteilen bestimmt und weisen aufgrund ihrer spezifischen Formulierung nicht die erforderliche Metallhaftung auf, um im teilvernetzten Zustand am vorgesehenen Ort zu bleiben. Die aus US8455090B2 und US2014087613A1 bekannten Prepregs werden in der Praxis zur Herstellung von Faserverbundbauteilen ohne nennenswerten Metallanteil genutzt.

Aus den zum Zeitpunkt der Anmeldung noch unveröffentlichten Anmeldungen EP15164444.0 und US 14/705,485 bzw. EP 15164477.0 und US 14/705,563 sind auf Stahl bzw. Aluminium und Polyurethan basierende Faserverbundbauteile bekannt, bei denen zunächst aus zwei Lagen Metall und einer Lage mit thermoplastischem Matrixmaterial imprägnierter Fasern ein Sandwich gebildet wird, welches sodann in seiner Gesamtheit umgeformt und abschließend das thermoplastische Matrixmaterial in ein duroplastisches Matrixmaterial endvernetzt wird. Dank einer besonderen Polyurethan-Formulierung wird eine gute Metallhaftung des Matrixmaterials im thermoplastischen Zustand erzielt und auch bei einer Umformung des Metallteils beibehalten. Die erhaltenden Hybridbauteile sind im Ergebnis global faserverstärkt.

Ein Verfahren zur Herstellung von global faserverstärkten Hybridbauteilen - so genannten Organoblechen - ist schließlich aus DE102011076546A1 bekannt. Die dort eingesetzten Prepregs weisen eine nicht lagerstabile, PU-basierte Matrix auf, die sich nach dem Endvernetzen duroplastisch verhält. Alternativ wird thermoplastisches Matrixmaterial auf Basis von Polyamid verwendet.

Im Hinblick auf diesen Stand der Technik liegt der vorliegenden Erfindung die Aufgabe zu Grunde, eine Technologie anzugeben, die es in kostengünstiger Weise ermöglicht, Metallteile lokal mit einem Faserverbundmaterial zu versteifen. Konkret soll das Faserverbundmaterial einfach zu handhaben, zu lagern und zu transportieren sein. Enge Verarbeitungszeitfenster sollen vermieden werden um die Produktion zeitlich und örtlich flexibler zu machen. Ohne die Notwendigkeit, zusätzlichen Klebstoff aufzutragen, soll das Matrixmaterial an dem Metallteil gut anhaften. Insbesondere soll das Metall nach dem Anbringen des Faserverbundmaterials noch in eine andere Gestalt umgeformt werden können, ohne dass dabei das Faserverbundmaterial zerstört oder deplatziert wird. Das Matrixmaterial soll zudem in der Endanwendung die typischen Vorteile duroplastischer Polymere gegenüber thermoplastischen Polymere erzielen, nämlich höhere mechanische Festigkeiten und Steifigkeiten, verbessertes Kriechverhalten, erhöhte Chemikalienbeständigkeit und geringere Wasseraufnahme. Letztendlich soll ein industriell praktikables Verfahren zur Großserien-Herstellung von Hybridbauteilen angegeben werden, die einen metallischen Grundkörper umfassen, der mit einer lokalen Versteifung aus duroplastischen Faserverbundmaterial versehen ist.

Gelöst werden diese Aufgaben durch ein Verfahren zur Herstellung eines Hybridbauteils, welches die folgenden Schritte aufweist:
a) Bereitstellen einer reaktiven Zusammensetzung zumindest enthaltend:
   o mindestens einen Härter, bei welchem es sich um ein Uretdion handelt, dessen NCO-Funktionalität mindestens zwei beträgt,
   o mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, wobei die Fasern in das thermoplastische Polymer eingebettet werden;
e) Bereitstellen eines metallischen Grundkörpers oder eines Halbzeugs desselben;
f) Platzieren des thermoplastischen Polymers mit den darin eingebetteten Fasern an einem lokal begrenzten Bereich des Grundkörpers bzw. dessen Halbzeugs;
g) Anpressen des thermoplastischen Polymers an den Grundkörper bzw. dessen Halbzeug, sodass die Fasern über das thermoplastische Polymer an dem Grundkörper bzw. dessen Halbzeug anhaften;
h) Umformen des Halbzeugs mit dem daran anhaftenden thermoplastischen Polymer zu dem metallischen Grundkörper, sofern in Schritt e) lediglich ein Halbzeug des Grundkörpers bereitgestellt wurde;
i) Beaufschlagen zumindest des thermoplastischen Polymers mit Wärme zwecks Durchführung einer zweiten Vernetzungsreaktion, im Zuge derer das thermoplastische Polymer zu einem duroplastischen Polymer umgesetzt wird;
k) Erhalt des Hybridbauteils umfassend zumindest den metallischen Grundkörper, welcher mit mindestens einer lokalen Versteifung aus einem Faserverbundwerkstoff versehen ist, wobei der Faserverbundwerkstoff eine aus dem duroplastischen Polymer gebildete Matrix und darin eingebettet die Fasern umfasst.

Ein solches Herstellungsverfahren ist mithin ein Gegenstand der Erfindung. Ein Hybridbauteil, welches auf diese Weise hergestellt worden ist, ist ebenfalls Gegenstand der Erfindung. Schließlich ist noch die Verwendung des Hybridbauteils dann erfindungsgegenständlich, sofern im Sinne des Leichtbaus bei der Verwendung des Hybridbauteils im Bereich der Versteifung zumindest zeitweise ein lokales Belastungsmaximum wirkt.

Eine Grundidee des erfindungsgemäßen Verfahrens besteht darin, eine besondere Polyurethanformulierung zu verwenden, die sich in einer ersten Vernetzungsreaktion in ein thermoplastisches Polymer umsetzten lässt und später in einer zweiten Vernetzungsreaktion zu einem duroplastischen Matrixmaterial endvernetzt wird. Das thermoplastische Polymer zeichnet sich durch eine gute Haftung an Metalloberflächen aus. Mit dem angehefteten thermoplastischen Material lässt sich das Metall sogar noch umformen. Danach wird das Polyurethan duroplastisch ausgehärtet und erlangt seine endgültige Steifigkeit.

Erfindungsgemäß wird also erst nach dem Anpressen und dem optionalen Umformschritt die thermische Aushärtung zum duroplastischen Polymer vorgenommen. Die hohe Endfestigkeit des Faserverbundbauteils entsteht somit erst dann, wenn der Faserverbundwerkstoff bereits in den metallischen Grundkörper eingeformt ist.

Für den Erfolg des erfindungsgemäßen Verfahrens maßgeblich ist die Formulierung einer Polyurethanzusammensetzung, die eine zweistufige Vernetzung erlaubt und zugleich eine hohe Haftung auf metallischen Oberflächen erzielt. Die hier beschriebene Formulierung erfüllt diese Anforderungen vollauf und ist zudem bei Temperaturen unterhalb von 100°C lagerstabil. Eine Kühlung unter Raumtemperatur ist nicht erforderlich um eine ungewollte Vernetzung zu verhindern. Damit ist es möglich, das thermoplastische Polymer mit den darin eingebetteten Fasern, Zuschnitte und/oder vorverpresste Lagen davon oder auch das Werkstück mit noch nicht ausgehärteter Matrix selbst zu lagern oder zu transportieren, bevor es im nächsten Schritt weiterverarbeitet wird. Auf diese Weise ist eine Aufteilung des Herstellungsverfahrens auf unterschiedliche Betriebstätten möglich, weswegen das Verfahren sogar über Unternehmensgrenzen hinweg betrieben werden kann. Dies erhöht die Flexibilität der Produktion deutlich und erschließt große Potentiale zur Einsparung von Produktionskosten.

Ein weiter Vorzug der hier beschriebenen Polyurethanzusammensetzung ist, dass die Temperaturen und Zeiten, die zur Durchführung der Vernetzungsreaktionen erforderlich sind, an Temperaturregime angepasst sind, welche in Wärmebehandlungsprozessen herrschen, die ohnehin im Rahmen der Metallverarbeitung vorgesehen sind. Die Beaufschlagung mit Wärme zwecks Durchführung der Vernetzungsreaktionen kann mithin im Zuge solcher metallurgischer Wärmebehandlungen durchgeführt werden, die ohnehin erforderlich sind. Dies gilt insbesondere für die zweite Vernetzungsreaktion, die stets in Gegenwart des metallischen Grundkörpers durchgeführt wird. (Die erste Vernetzungsreaktion kann auf Grund der Lagerstabilität in Abwesenheit des metallischen Grundkörpers bzw. dessen Halbzeug erfolgen.) Durch die Anpassung der Vernetzungstemperaturen und Zeiten an die metallurgischen Prozesse fällt für die Durchführung der polymerchemischen Vernetzungsreaktionen praktisch kein Mehraufwand an.

Die erfindungsgemäß eingesetzte Matrix der faserverstärkten Versteifung gehört zu der Klasse der Polyurethane. Sie entsteht durch Additionsreaktion der beiden Ausgangskomponenten Binder und Härter. Binder und Härter werden zusammen mit etwaigen Zusatzstoffen als reaktive Zusammensetzung bereitgestellt.

Als Binder werden hydroxylgruppenhaltige organische Substanzen eingesetzt. In Betracht kommen dafür grundsätzlich alle in der Polyurethan-Chemie üblicherweise eingesetzten Polyolverbindungen. Die Polyole müssen jedoch drei bis sechs Hydroxylgruppen aufweisen. Die Anzahl oder auch Funktionalität der Hydroxylgruppen bestimmt maßgeblich die Vernetzungsdichte und somit die mechanischen Eigenschaften der ausgehärteten Matrix. Um ein dreidimensional eng vernetztes, duroplastisches Polymernetzwerk zu erhalten, ist eine Funktionalität der Polyolkomponente von mindestens drei erforderlich. Eine Funktionalität größer sechs führt hingegen dazu, dass das Polyurethan im duroplastischen Endzustand eine überhöhte Vernetzungsdichte erreicht und die Matrix versprödet. Im Ergebnis muss die OH-Funktionalität des als Binder eingesetzten Polyols zwischen drei und sechs liegen. Selbstverständlich können auch Mischungen verschiedener Polyole eingesetzt werden, was in der Praxis der Fall sein wird. Sofern mehrere Polyole verwendet werden, beziehen sich die Angaben der Funktionalität auf gemittelte Werte der Polyolmischung.

Außerdem muss mindestens eines der als Binder eingesetzten Polyole außer über Hydroxylgruppen über zusätzliche polare funktionelle Gruppen verfügen, die Wechselwirkungen mit Metalloberflächen eingehen. Hierzu zählen beispielsweise Ester-, Carbonat-, Amid-, Urethan-, Urea-, Thioester- oder Thiocarbonatgruppen. Beispiele für geeignete Polyole sind lineare oder verzweigte hydroxyl-gruppenhaltige Polyester, Polycarbonate, Polycaprolactone, Polyesteramide, Polyurethane oder Polyacetale. Polyether oder Polythioether weisen im Vergleich eine deutlich geringere Metallhaftung auf und sind daher als Hauptbestandteil der Polyolmischung nicht geeignet.

Die beste Metallhaftung erzielen Polyesterpolyole und innerhalb dieser Substanzklasse die Polycaprolactone. Besonders bevorzugt wird deswegen mindestens ein Polycaprolacton als Binder eingesetzt.

Die Substanzklasse der Polyether erreicht demgegenüber nur eine geringe Metallhaftung. Deswegen wird vorzugsweise ein Binder eingesetzt, dessen polare funktionale Gruppe keine Etherfunktionalität aufweist.

Die OH-Zahl der Polyole sollte zwischen 20 mg KOH / g und 500 mg KOH / g liegen und deren Säurezahl höchstens 2 mg KOH / g betragen. Die OH-Zahl wird gemäß DIN 53 240-2 bestimmt; die Säurezahl gemäß DIN EN ISO 2114. Die molare Masse berechnet sich aus der Summe der Hydroxyl- und Carboxyl-Endgruppen. Das mittlere Molekulargewicht liegt bei 50 g/mol bis 10000 g/mol, bevorzugt 100 g/mol bis 5000 g/mol.

Bevorzugt werden lineare oder leicht verzweigte hydroxylgruppenhaltige Polyester - sogenannte Polyesterpolyole - eingesetzt. Diese sind aus ihrer Anwendung in der Metallbandbeschichtung (coil coating) für eine gute Metallhaftung bekannt; vgl. Organic Coatings: Sience and Technology, Z.W.Wicks, Jr.F. Jones, S.P.Pappas, Wiley-Interscience, New York 1999, cap. 24.2.1.2., Seite 459.

Polyesterpolyole werden beispielsweise über eine Polykondensationsreaktion, das heißt durch Umsetzung von Polyolen mit unterschüssigen Mengen an Polycarbonsäuren oder ihren Derivaten, wie z. B. Polycarbonsäureanhydriden, Polycarbonsäureestern von niederen Alkoholen, Lactonen oder Hydroxycarbonsäuren hergestellt.

Zur Herstellung der Polyesterpolyole geeignete Diole sind beispielsweise Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, - ethanol, 2,4-Dimethyl-2-ethylhexan-1,3-diol, 1,4- und 2,3-Butylenglykol, Di-ßhydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan (Dicidol), 2,2-Bis-(4-hydroxycyclohexyl)propan, 2,2-Bis-[4-(ß-hydroxyethoxy)-phenyl]propan, 2-Methylpropandiol-1,3, 2-Methylpentandiol-1,5, 2,2,4(2,4,4)-Trimethylhexandiol-1,6, Hexantriol-1,2,6, Butantriol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Propion-, Bernstein-, Glutar-, Adipin-, Kork-, Azelain- und Sebacin-, Azelain- und Dodecandisäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Die zur Herstellung der Polyesterpolyole verwendeten Diole und Dicarbonsäuren bzw. deren Derivate können in beliebigen Mischungen eingesetzt werden.

Geeignete Polyesterpolyole sind auch solche, die sich in bekannter Weise durch Ringöffnung aus Lactonen, wie ε-Caprolacton, und einfachen Diolen als Startermoleküle herstellen lassen. Solche Polycaprolactone sind beispielsweise aus der Produktlinie Capa® von Perstorp/Schweden erhältlich.

Werden Polyesterpolyole als Binder eingesetzt, sollte deren OH-Zahl zwischen 20 mg KOH / g und 500 mg KOH / g liegt und deren Säurezahl höchstens 2 mg KOH / g betragen. Die OH-Zahl wird gemäß DIN 53 240-2 bestimmt; die Säurezahl gemäß DIN EN ISO 2114. Die molare Masse berechnet sich aus der Summe der Hydroxyl- und Carboxyl-Endgruppen. Das mittlere Molekulargewicht liegt bei 50 g/mol bis 10000 g/mol, bevorzugt 100 g/mol bis 5000 g/mol.

Die zweite Ausgangskomponente der Polyurethanmatrix ist ein latenter Härter, der über mindestens zwei blockierte Isocyanatgruppen verfügt. Eine Anzahl von mindestens zwei blockierten Isocyanatgruppen pro Molekül (die so genannte NCO-Funktionalität) ist notwendig für die Erzeugung eines engmaschigen polymeren Netzwerkes mit hohen mechanischen Festigkeiten nach der Reaktion mit den eingesetzten Polyolen. Bevorzugt weist der Härter intern blockierte Isocyanatgruppen auf. Konkret wird als Härter ein Uretdion eingesetzt.

Uretdione werden durch Di- bzw. Polymerisierung von Isocyanaten erhalten. Uretdiongruppen enthaltende Polyisocyanate sind wohlbekannt und werden beispielsweise in US4476054, US4912210, US4929724 sowie US5329003 beschrieben. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäuretriamiden oder Imdidazolen. Die Reaktion wird bevorzugt in Abwesenheit von Lösemitteln durchgeführt und bei Erreichen des gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet.

Die Di- und Polyisocyanate, die zur Herstellung der gemäß der Erfindung als Härter einsetzbaren Uretdione geeignet sind, können aus beliebigen aliphatischen, cycloaliphatischen und/oder (cyclo)aliphatischen Di- und/oder Polyisocyanaten bestehen. Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat (IPDI) der Fall ist.

Demgegenüber versteht man unter cycloaliphatischen Diisocyanaten solche, die nur direkt am cycloaliphatischen Ring gebundene NCO-Gruppen aufweisen, z. B. Diisocyanatodicyclohexylmethan (H12MDI). Weitere Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und - triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-lsocyanatopropylcyclohexyl-isocyanat, 2,4'-Methylenbis(cyclohexyl)diisocyanat, 1,4-Diisocyanato-4-methyl-pentan.

Bevorzugte Uretdione sind hergestellt aus Isophorondiisocyanat (IPDI), Hexamethylendiisocyanat (HDI), Diisocyanatodicyclohexylmethan (H12MDI), 2-Methylpentandiisocyanat (MPDI), Gemische aus 2,2,4 Trimethylhexamethylendiisocyanat und 2,4,4 Trimethylhexamethylendiisocyanat (TMDI), und Norbornandiisocyanat (NBDI). Besonders bevorzugt werden IPDI, HDI, TMDI und/oder H12MDI eingesetzt. Ganz besonders bevorzugt wird das Uretdion von IPDI und/oder HDI verwendet. Es können auch Mischungen von spezifikationsgemäßen Uretdionen als Härter eingesetzt werden.

Die bevorzugt eingesetzten Uretione sind frei von externen Blockierungsmitteln. Die interne Blockierung über die Dimerisierung zur Uretdionstruktur ist reversibel, bei erhöhter Temperatur spaltet das Uretdion wieder in die ursprünglich vorhandenen beiden Isocyanatgruppen zurück, die mit dem Binder vernetzen können. Der Vorteil gegenüber externen Blockierungsmitteln ist, dass bei der Abspaltung keine flüchtigen Nebenprodukte entstehen. Diese können zur Bildung von Gasblasen zwischen Faserverbundwerkstoff und Metalloberfläche bzw. zwischen den einzelnen Prepreg-Lagen der Versteifung und damit zu einer Delaminierung führen.

Neben den beiden zwingend notwendigen Ausgangskomponenten Härter und Binder kann die reaktive Zusammensetzung noch weitere Komponenten aufweisen:
Hier ist zunächst ein Cobindemittel zu nennen, welches zusammen mit einem korrespondierenden (zweiten) Härter bis zu einem geringen Aushärtungsgrad während der ersten Vernetzungsreaktion und endgültig in der zweiten Vernetzungsreaktion ebenfalls vernetzt. Neben einer weiteren Verbesserung der mechanischen Eigenschaften im vernetzten Zustand führt dies zu einer zusätzlichen Verbesserung der Metallhaftung über polare Wechselwirkungen.

Als Cobindemittel wird eine oxirangruppenhaltige Verbindung verwendet. Prinzipiell kommen alle Epoxidharze, z. B. Polyepoxide auf Basis von Bisphenol A-diglycidylether, Bisphenol F-diglycidylether oder cycloaliphatische Typen wie z.B. 3,4-Epoxycyclohexyl-epoxyethan oder 3,4-Epoxycyclohexylmethyl-3,4-epoxy-cyclohexancarboxylat, in Frage. Erfindungsgemäß können auch Mischungen verschiedener Epoxidharze als Cobindemittel eingesetzt werden. Das Cobindemittel führt zu einer Verbesserung der Metallhaftung der Matrix und gleichzeitig zu einer zusätzlichen Vernetzung. Da das Cobindemittel in der reaktiven Zusammensetzung bereitgestellt wird, braucht es vor dem Anheften des Thermoplasts an dem Metall nicht wie ein Klebstoff separat aufgetragen zu werden. Es verbessert vielmehr die intrinsisch adhäsiven Eigenschaften der Matrix.

Das Epoxyequivalentgewicht (EEW) des Cobindemittels, bestimmt gemäß ASTM D 1652, liegt bevorzugt zwischen 100 und 1000 g/eq. Werden Epoxyverbindungen mit einem EEW oberhalb von 1000 g/eq eingesetzt, steigt die Viskosität der Matrix sehr stark an, so dass eine Verarbeitung erschwert wird. Zudem kommt es zu einer starken Versprödung der Matrix, so dass die mechanischen Eigenschaften sinken.

Als korrespondierender Härter für das Cobindemittel taugen aliphatische oder zykloaliphatische Polyamine, Polyetheramine, Polymercaptane oder Polyamidoamine. Bevorzugt sind jedoch Polycarbonsäuren bzw. Polycarbonsäureanhydride, die bei erhöhten Temperaturen unter Ringöffnung mit der Oxirankomponente des Cobindemittels zu Carbonsäureestern reagieren. Besonders bevorzugt werden die oligomeren Addukte von Benzol-1,2,4-tricarbonsäure-1,2-anhydrid oder Pyromellitsäureanhydrid mit Ethylenglykol und Glyzerol als korrespondierender Härter für das Cobindemittel verwendet.

Zusätzlich kann die reaktive Zusammensetzung weitere Komponenten, etwa Verarbeitungshilfsmittel oder Zusatzstoffe wie Rheologiemodifizierer, Trennmittel, Füllstoffe, Entlüfter, Entschäumer, Fließhilfsmittel, Benetzungsmittel, Flammschutzmittel, Farbpigmente und/oder Verlaufshilfsmittel enthalten. Für solche Komponenten wird im Folgenden der Sammelbegriff "Additive" gebraucht.

Zudem kann die Reaktivität der Zusammensetzung bei Bedarf über Zusatz eines Katalysators beschleunigt werden. Bei der Zugabe eines Katalysators ist jedoch zu beachten, dass die Anforderungen an die Lagerstabilität der thermoplastischen Polyurethanmatrix weiterhin erfüllt werden. Eine besondere Ausführungsform der Erfindung sieht sogar vor, dass die reaktive Zusammensetzung bewusst frei ist von Substanzen, die in der ersten und/oder zweiten Vernetzungsreaktion katalytisch wirken, um nicht eine ungewollte Vernetzung hervorzurufen und dadurch die Lagerstabilität zu schmälern.

Katalytisch wirkende Substanzen sind in diesem Zusammenhang quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion. Beispiele dafür sind Tetramethylammoniumformiat, -acetat, -propionat, -butyrat oder -benzoat, sowie die entsprechenden Tetraethyl-, Tetrapropyl- und Tetrabutylammonium oder - phosphoniumsalze.

Die reaktive Zusammensetzung kann wahlweise trocken oder flüssig bereitgestellt werden.

In trockener Form liegt die reaktive Zusammensetzung als Pulver vor. Dieses wird auf die Fasern aufgestreut und/oder aufgeschmolzen, damit es vor dem Anvernetzen nicht von den Fasern fällt.

Alternativ werden die Bestandteile der Zusammensetzung in einem flüssigen Lösemittel gelöst oder zumindest suspendiert oder dispergiert, falls sich nicht alle Bestandteile lösen lassen. Die Zusammensetzung ist damit praktisch flüssig und die Fasern werden mit der flüssigen Zusammensetzung imprägniert. Die flüssig im Lösemittel bereitgestellte Zusammensetzung ist technologisch einfacher zu handhaben als trockene, pulverförmige Zusammensetzungen. Nachteilig bei der Verwendung von Lösungsmitteln können bei einer ungenügenden Trocknung verbleibende flüchtige Bestandteile sein, die nach der ersten Vernetzungsreaktion im Polymer verbleiben und zu Blasenbildung führen können. Allerdings geschieht das Entfernen des Lösungsmittels im Zuge der Durchführung der ersten Vernetzungsreaktion durch Verdampfen unter der ohnehin notwendigen Wärmeeinwirkung, weswegen kein zusätzlicher Arbeitsschritt erforderlich wird.

Das Lösemittel muss daher nicht nur die Komponenten der reaktiven Zusammensetzung möglichst vollständig lösen, sondern sich auch bei der zwecks Durchführung der ersten Vernetzungsreaktion vorgenommenen Beaufschlagung der Zusammensetzung mit Wärme möglichst vollständig verflüchtigen.

Für diesen Zweck geeignete Lösungsmittel sind polare, aprotische Substanzen mit hohen Siedepunkten, wie Ester und/oder Ketone. Besonders bevorzugt werden die Substanzen Isopropylacetat und Methylisobutylketon als Lösemittel eingesetzt. Es können auch Mischungen mehrerer Substanzen als Lösungsmittel eingesetzt werden. Aus Kosten- und Umweltgründen sollte die Menge an Lösungsmittel auf ein erforderliches Minimum reduziert werden. Bevorzugt werden 35 bis 50 Gewichtsprozent an Lösemittel bezogen auf das Gesamtgewicht des Gemisches eingesetzt.

Die vorstehend beschriebenen Komponenten werden mengenmäßig wie folgt zu der reaktiven Zusammensetzung formuliert:

| | | |
|---|---|---|
| • | Binder: | 10 Gew.-% bis 80 Gew.-%; |
| • | Härter: | 20 Gew.-% bis 90 Gew.-%; |
| • | Cobindemittel: | 0 Gew.-% bis 15 Gew.-%; |
| • | korrespondierender Härter | 0 Gew.-% bis 20 Gew.-% |
| • | Additive: | 0 Gew.-% bis 5 Gew.-%; |
| • | Lösemittel: | 0 Gew.-% bis 50 Gew.-%. |

Die Summe dieser Komponenten ergibt selbstverständlich100 Gewichtsprozent. Sofern ein Lösemittel verwendet wird, wird dieses als Bestandteil der reaktiven Zusammensetzung aufgefasst.

Die angegebene Formulierung hat im Übrigen den technologischen Vorteil, dass sie wasserfrei ist und dass während der Reaktion auch kein Wasser entsteht. Wasserrückstände im Hybridbauteil könnten nämlich dazu führen, dass der metallische Grundkörper von innen rostet und die Haftung zum Faserverbundwerkstoff beeinträchtigt wird. Eine Zusammensetzung, die 0 Gew.-ppm bis 500 Gew.-ppm Wasser enthält, wird in diesem Zusammenhang als wasserfrei verstanden. Dieses Wasser ist aber nicht absichtlich hinzugegeben sondern wird sich aus der feuchten Umgebungsluft in der Zusammensetzung ansammeln, vor allem dann, wenn hygroskopische Formulierungsbestandteile verwendet werden.

Nachdem ausführlich auf die Chemie der erfindungsgemäß als reaktive Zusammensetzung verwendeten Polyurethan-Formulierung eingegangen wurde, sollen nun die verfahrenstechnischen Aspekte der Erfindung näher erläutert werden.

Die Art und Weise, in der die Fasern bereitgestellt werden, hängt von den verwendeten Fasern und deren Darreichungsform ab. Die Fasern selbst bestehen aus den üblichen Fasermaterialien wie Glas, Kohlenstoff, Aramid. Es können aber auch Fasern aus Basalt, Metall oder organischen Naturmaterialien verwendet werden. Die Fasern können als kurze Stapelfaser oder endlose Filamente vorliegen. Die Fasern werden in der Regel nicht lose, sondern als textiles Flächengebilde und/oder Liniengebilde bereitgestellt. Bei dem textilen Flächengebilde handelt es sich um Gewebe, Gelege, Gewirke, Gestricke, unidirektionale Faserbündel oder Vliese aus dem entsprechenden Fasermaterial. Textile Liniengebilde sind Rovings, Garne oder Geflechte. Aus dem textilen Liniengebilde können wieder textile Flächengebilde aufgebaut sein, etwa wenn ein Garn verwebt wird. Bezüglich der Dimension des textilen Flächengebildes gibt es keine Einschränkung, es können insbesondere auch Tapes oder Bändchen zum Einsatz kommen. Das textile Flächengebilde wird in einzelnen Zuschnitten bereitgestellt, bevorzugt jedoch als Bahnenware von einer Rolle abgewickelt.

Sofern die reaktive Zusammensetzung als trockenes Pulvergemisch eingesetzt wird, erfolgt das Belegen der Fasern mit der Zusammensetzung einfach durch Aufstreuen. Das Aufschmelzen und Anvernetzen (erste Vernetzungsreaktion) erfolgt über Wärmeeintrag, etwa durch Kontaktwärme oder Wärmestrahlung. Durch den Wärmeeintrag wird in geringem Ausmaß die Additionspolymerisation zwischen Härter und Binder ausgelöst. Der Reaktionsumsatz ist unter den gewählten Prozessbedingungen so gering, dass es lediglich zu einem Anstieg des Molekulargewichts, aber noch nicht zu einer Bildung eines dreidimensionalen Netzwerks kommt. Es resultiert daher ein Thermoplast, der sich reversibel aufschmelzen und wieder abkühlen lässt. Aufgrund der Wärme liegt der Thermoplast als niedrigviskose Schmelze vor und dringt in die Zwischenräume zwischen den Fasern ein. Auf diese Weise werden die Fasern in das thermoplastische Polymer eingebettet. Die Pulverroute ist daher besonders umweltfreundlich, da keine Lösemittel eingesetzt und entfernt werden müssen.

Falls die reaktive Zusammensetzung flüssig verarbeitet werden soll, werden Binder und Härter in einem Lösemittel gelöst bereitgestellt. Das Belegen der Fasern bzw. des textilen Flächengebildes erfolgt durch Imprägnierung desselben mit der Lösung. Dies hat gegenüber dem Aufstreuen von Pulver den Vorteil, dass das reaktive Gemisch so auch tief in das textile Flächengebilde eindringt, wodurch die Haftung des Gemisches an dem Textil während der Produktion und später des Faser/Matrix-Verbundes verbessert wird. Deswegen wird eine flüssige Zusammensetzung der Pulvervariante vorgezogen.

Die Imprägnierung der Fasern bzw. des textilen Flächengebildes geschieht durch Tränkung, Tauchen oder sonstige für die Verarbeitung geeignete Verfahren. Maßgeblich ist, dass die Fasern von der Lösung umschlossen werden. Dies wird dann erreicht, wenn die Lösung in die Zwischenräume zwischen den Fasern möglichst vollständig füllt. Grundsätzlich ist es denkbar, nicht die Gesamtheit der Fasern zu imprägnieren sondern lediglich einzelne Faserabschnitte. Bevorzugt erfolgt die Imprägnierung kontinuierlich in einem Rolle-zu-Rolle-Prozess.

Die oben spezifizierten Lösemittel lassen sich nach der Imprägnierung durch Verdampfung wieder leicht aus dem textilen Flächengebilde entfernen. Dafür sind aufgrund der hohen Flüchtigkeit dieser Lösemittel nur geringe Temperaturen erforderlich. Außerdem lassen sich mit diesen Lösemitteln nach der Trocknung vernachlässigbare Restlösemittelgehalte unterhalb von einem Gewichtsprozent, bevorzugt unterhalb von 0,5 Gewichtsprozent, erzielen.

Der Prozessschritt des Verdampfens des Lösemittels und die Durchführung der ersten Vernetzungsreaktion erfolgt bevorzugt in einem Arbeitsschritt durch Wärmeeinwirkung bei einer Temperatur von 80°C bis 170°C, bevorzugt bei einer Temperatur von 120°C bis 160°C, und besonders bevorzugt bei einer Temperatur von 140°C bis 160°C. Die Dauer der Wärmeeinwirkung beträgt eine Minute bis 60 Minuten, vorzugsweise zehn Minuten bis 30 Minuten. Die Beaufschlagung mit Wärme erfolgt am besten berührungslos mit Infrarot-Strahlung oder Wärmestrahlung. Die Wärme kann auch mit einem heißen Gasstrom aufgebracht werden. Die Wärme ruft einerseits das Verdampfen des Lösemittels und zum anderen die Reaktion von Härter und Binder zu dem thermoplastischen Polymer hervor. Da die Fasern mit der Lösung imprägniert waren, werden die Fasern in den entstehenden Thermoplasten tief eingebettet. Wenn die imprägnierten Fasern auf einer Rolle vorliegen, erfolgt das Verdampfen des Lösemittels und das Durchführen der ersten Vernetzungsreaktion am rationellsten auf dieser Rolle, zum Beispiel in einem Durchlaufofen.

Nach Abschluss der ersten Vernetzungsreaktion wird das entstandene Prepreg, also das thermoplastische Polymer mit den darin eingebetteten Fasern, konfektioniert. Dies ist vor allem dann notwendig, wenn das Prepreg von der Rolle kommt. Bei der Konfektionierung wird das thermoplastische Polymer zunächst zugeschnitten und die einzelnen Prepreglagen gestapelt. Die Anzahl der Lagen richtet sich dabei nach der angestrebten Dicke der späteren Versteifung. Es ist auch möglich, in den einzelnen Lagen unterschiedliche Prepregmaterialien einzusetzen. Die vorbereiteten Stapel werden dann in einer Zuschneidvorrichtung auf die erforderliche Geometrie zugeschnitten. Für das Zuschneiden werden gängige Techniken wie Laser- oder Wasserstrahlschneiden eingesetzt. Bevorzugt wird das Zuschneiden so durchgeführt, dass möglichst viel Material genutzt und der Verschnitt reduziert wird. Das thermoplastische Polymer des Verschnitts kann übrigens im Prozess wiederverwertet werden, indem es abgeschmolzen wird. Die dabei freigelegten Fasern werden aber meist zu verwerfen sein. Alternativ kann das Material als Kurzschnitt verpresst werden.

Das Herstellen der Prepregs, also das Belegen der Fasern mit der Zusammensetzung und die Durchführung der ersten Vernetzungsreaktion, ggf. auch die Konfektionierung der Schichten oder Stapel, erfolgt vorzugsweise in Abwesenheit des metallischen Grundkörpers bzw. dessen Halbzeug. Genauer gesagt wird das Prepreg an einem entfernten Ort, in einem anderen Betrieb oder einem anderen Unternehmen hergestellt als der Ort, der Betrieb oder das Unternehmen, in dem das Metallteil mit der Faserverbund-Verstärkung versehen und damit das Hybridbauteil hergestellt wird. Auf diese Weise kann sich jeder Betrieb auf seine Kernkompetenzen konzentrieren und der Hersteller der Prepregs kann mehre Hersteller von unterschiedlichen Hybridbauteilen beliefern. Dies steigert die Produktionsflexibilität enorm und senkt die Produktionskosten. Dies ist nur deshalb möglich, weil das thermoplastische Polymer bei Raumtemperatur, ohne Kühlung, also etwa zwischen 15°C und 30°C, bis zu etwa einem Jahr lagerstabil ist. In der Zwischenzeit kann es zwischen dem Hersteller des Prepregs und dem Hersteller des eigentlichen Hybridbauteils weltweit transportiert und ggf. auch in einem Zwischenlager aufbewahrt werden. Gleichwohl kann auch in einem Unternehmen auf einer Fertigungsstraße zunächst der Prepreg und dann das gesamte Hybridbauteil hergestellt werden. Mithin kann zwischen der Durchführung der ersten Vernetzungsreaktion (Herstellung des Prepregs) und Durchführung der zweiten Vernetzungsreaktion (Herstellung des eigentlichen Hybridbauteils) ein Zeitraum von einem Tag bis zu einen Jahr vergehen, in dem das thermoplastische Polymer mit den eingebetteten Fasern (der Prepreg) gelagert und/oder transportiert wird.

Bei der Herstellung des eigentlichen Hybridbauteils wird der metallische Grundkörper des Hybridbauteils mit der lokalen Verstärkung aus dem Faserverbundmaterial versehen.

Sofern das thermoplastische Polymer mit den darin eingebetteten Fasern schichtweise bereitgestellt wird, wird die Schrittfolge Platzieren und Anpressen dann entsprechend mehrfach durchgeführt, um das thermoplastische Polymer mit den darin eingebetteten Fasern schichtweise auf dem Metall zu platzieren und anzupressen. Dadurch, dass die Schichten erst auf dem Metallteil zu der Versteifung gestapelt werden, lassen sich die Schichten flexibler für unterschiedliche Hybridbauteile einsetzen. Hauptargument für das Anpressen von Einzellagen ist jedoch eine bessere Drapierbarkeit, da eine Einzellage weniger steif ist als ein Stapel aus mehreren Schichten.

Alternativ können die einzelnen Schichten des thermoplastischen Polymers mit den darin eingebetteten Fasern in Abwesenheit des Grundkörpers bzw. dessen Halbzeug zu einem Stapel verpresst werden. Die Schrittfolge Platzieren und Anpressen erfolgt dann dadurch, dass der Stapel auf den Grundkörper bzw. dessen Halbzeug platziert und angepresst wird. Bei dem Stapel handelt es sich mithin um ein speziell für das Hybridbauteil vorkonfektioniertes Verstärkungspatch, was nach dem Andrücken nur noch ausgehärtet werden muss. Der Stapel ist daher speziell für das jeweilige Hybridbauteil anpasst, was dessen Leichtbau optimiert. Das Anpressen des Stapels kann rascher erfolgen als das Aufbringen von einzelnen Lagen.

Das schichtweise bzw. stapelweise Aufbringen des thermoplastischen Polymers auf das Metallteil entspricht grundsätzlich der üblichen Verarbeitung von Prepregs.

Da das thermoplastische Polymer noch flexibel ist, kann es zusammen mit dem Metallteil noch verformt werden. Deswegen bietet das erfindungsgemäße Verfahren wahlweise die Option an, entweder den metallischen Grundkörper in seiner Endgeometrie bereitzustellen oder aber - und das ist fertigungstechnisch besonders interessant - zunächst lediglich ein Halbzeug des späteren metallischen Grundkörpers bereitzustellen und dieses gemeinsam mit dem daran anhaftenden thermoplastischen Polymer in die Endgeometrie zu überführen. Das Halbzeug wird dabei mit üblicher Technologie der Metallverarbeitung zum Grundkörper umgeformt. Dafür kommen insbesondere die in der Blechumformung bewährten Verfahren in Betracht, etwa Biegen, Pressen oder Tiefziehen. Verfahren der Massivumformung kommen weniger in Frage, da der metallische Grundkörper vor dem Gesichtspunkt des Leichtbaus aus eher schlank dimensioniert ist und deswegen schließlich auch versteift werden muss.

Je nachdem, ob das Metallteil sich bereits in Endgeometrie befindet oder noch im Rahmen des erfindungsgemäßen Herstellungsverfahrens umgeformt wird, wird das thermoplastische Polymer mit den darin eingebetteten Fasern auf dem Grundkörper bzw. auf dessen Halbzeug platziert. Die Platzierung erfolgt in einem lokal begrenzten Bereich des Grundkörpers bzw. dessen Halbzeug, da die spätere Verstärkung sich lediglich lokal erstreckt.

Aufgrund der adhäsiven Eigenschaften der hier beschriebenen Polyurethan-Formulierung haftet das thermoplastische Material an dem vorgesehen Ort an und verbleibt dort selbst dann, wenn der Grundkörper mit angehefteten Thermoplasten gedreht, gewendet oder transportiert wird. Selbst wenn beim Umformen des Halbzeugs das Metall wegfließt, bleibt das thermoplastische Polymer an dem fließenden Metall haften und verformt sich entsprechend. Die damit verbundene Lageänderung ist beim Platzieren des Prepregs auf dem Halbzeug zu berücksichtigen.

Im nächsten Schritt wird der zugeschnittene Prepregstapel mit dem metallischen Grundkörper bzw. dessen Halbzeug durch Anpressen verbunden. Hierfür wird entweder der vorvernetzte Faserverbundwerkstoff in den Grundkörper eingelegt, oder umgekehrt der Grundkörper über den Faserverbundwerkstoff gestülpt. Bevorzugt wird das Fügen unter Druck in einem Presswerkzeug durchgeführt, um einen vollständigen Stoffschluss zwischen den beiden Oberflächen sicherzustellen und Lufteinschlüsse zu minimieren. Da das thermoplastische Polymer ohne weiteres Zutun bereits an dem Metallteil haftet, sind zusätzliche Klebstoffe nicht erforderlich. Eine bevorzugte Weiterbildung der Erfindung sieht deswegen vor, dass das thermoplastische Polymer mit den darin eingebetteten Fasern ohne Verwendung eines zusätzlichen Klebstoffes an dem lokal begrenzten Bereich des Grundkörpers bzw. dessen Halbzeugs platziert wird. Auf diese Weise lassen sich die Prozesskosten deutlich einsparen. Der Zeitbedarf für den Stoffschluss ist möglichst gering zu wählen, um die in der Automobilindustrie üblichen Taktzeiten einzuhalten. Bevorzugt beträgt der Füge- und Pressvorgang weniger als 5 Minuten, besonders bevorzugt weniger als 1 Minute.

Es besteht die Möglichkeit, auf das thermoplastische Material noch eine Verblendung aufzubringen. Hintergrund ist, dass Faserverbundmaterialien nicht immer ansehnlich sind und vor allem im Automobilbereich auf Ablehnung der Kundschaft stoßen. Um zu vermeiden, dass der Kunde die Versteifung als minderwertigen Kunststoff einstuft, kann die noch thermoplastische Matrix mit einer Verblendung aus einer dünnen Metallfolie oder einem Kunststoff mit hochwertiger Anmutung versehen werden, welche die Versteifung auf der späteren Sichtseite des Hybridbauteils verdeckt. Die Verblendung hat keine mechanische Funktion und ist entsprechend nicht tragend. Die mechanische Funktion der Versteifung des metallischen Grundkörpers übernimmt einzig das Faserverbund material.

Daneben erschließt die Verblendung den prozesstechnischen Vorteil, dass bei der anschließenden Aushärtung unter erhöhten Temperaturen das noch thermoplastische, klebrige Matrixmaterial nicht in Kontakt mit weiteren Bauteilen oder dem Ofen kommt und daran ungewollt haftet.

Aufgrund der adhäsiven Eigenschaften des Thermoplasts haftet die Verblendung darauf ohne weitere Fügemittel. Wird eine Metallfolie als die Verblendung genutzt und später noch gemeinsam mit dem metallischen Grundkörper lackiert, erscheint das lackierte Hybridbauteil für den Kunden wie ein klassisches Metallbauteil.

Eine bevorzugte Weiterbildung der Erfindung besteht mithin darin, dass vor dem Beaufschlagen des thermoplastischen Polymers mit Wärme eine Verblendung auf den thermoplastischen Polymer aufgebracht und mit diesem verpresst wird, dergestalt, dass nach der Durchführung der zweiten Vernetzungsreaktion die Verblendung an der duroplastischen Matrix anhaftet und die Versteifung des Hybridbauteils sichtseitig verblendet.

Im Anschluss an das Fügen von metallischem Grundkörper und thermoplastischen Polymer bzw. des Umformens des Halbzeugs mit daran anhaftenden Thermoplasten erfolgt die zweite Vernetzungsreaktion der noch thermoplastischen Matrix zum endgültigen Duroplasten. Hierfür ist eine Beaufschlagung des Thermoplasts mit Wärme erforderlich. Dies geschieht beispielsweise mit Hilfe von Wärmestrahlung, Infrarotstrahlung oder mit einem Heißgas. Unter der Wärmeeinwirkung vernetzt das Polyurethan vollständig und erhält dadurch seine duroplastischen Eigenschaften und die Versteifung ihre endgültige Festigkeit. Eine weitere Verformung des Metalls im Bereich der Versteifung ist dann nicht mehr möglich; allenfalls Bereiche des Hybridbauteils, die von der lokalen duroplastischen, faserverstärkten Versteifung nicht versteift sind, könnten nachträglich noch weiter umgeformt werden.

Selbstverständlich ist es möglich, an dem Metall mehrere Versteifungen vorzusehen und diese nacheinander zu platzieren und zeitgleich oder nacheinander zu vernetzten. Das Hybridbauteil kann also mehre lokal begrenzte Versteifungen aufweisen.

Die hier beschriebene Polyurethanrezeptur erlaubt eine Endvernetzung bei einer Temperatur zwischen 160°C und 220°C, optimal ist eine Temperatur zwischen 180°C und 200°C. Bevorzugte Weiterbildungen der Erfindung basieren mithin darauf, dass die zweite Vernetzungsreaktion bei Temperaturen von 160°C bis 220°C, besonders bevorzugt bei Temperaturen von 180°C bis 200°C durchgeführt wird. Insbesondere sollte die zweite Vernetzung bei einer Temperatur erfolgen, die mindestens 20°C höher liegt als die Temperatur, bei der die erste Vernetzungsreaktion durchgeführt wird. Die Dauer der Wärmebehandlung liegt im Bereich von mehreren Minuten bis einigen Stunden, bevorzugt bei 20 bis 60 Minuten.

Dieses Temperaturregime ist deshalb vorteilhaft, da derartige Temperaturen auch in Wärmebehandlungsschritten herrschen, welchen das metallische Bauteil ohnehin unterworfen werden muss. Dies können zum Beispiel metallurgische Gefügeveränderungen des Metalls wie zum Beispiel das Härten oder das Spannungsarm glühen sein. Die Wärmebehandlung kann aber auch Teilschritt einer Oberflächentechnologie sein, wie etwa das Einbrennen einer Korrosionsschutzschicht. Da insbesondere in Automobilen eingesetzte Hybridbauteile ohnehin einer kathodischen Tauchlackierung unterzogen werden, die mit einer Wärmebehandlung des elektrophoretisch aufgetragenen Lacks in dem zur Rede stehenden Temperaturbereich abschließt, bietet es sich an, die zweite Vernetzungsreaktion im Zuge der Aushärtung eines elektrophoretisch auf den metallischen Grundkörper aufgetragene Korrosionsschutzschicht durchzuführen. Bevorzugt wird hierfür der Prozessschritt des Einbrennens der Lackschicht nach der kathodischen Tauchlackierung genutzt. Auf diese Weise lässt sich das Aushärten der Matrix in den Prozess integrieren, ohne dass ein zusätzlicher Prozessschritt erforderlich ist. Ein ähnlicher Ansatz ist in US2015/0174642A1 beschrieben.

Der metallische Grundkörper bzw. dessen Halbzeug besteht einfachstenfalls aus einem herkömmlichen Metallwerkstoff wie Stahl oder einer Aluminium- oder Magnesiumlegierung.

Eine bevorzugte Ausführungsform der Erfindung sieht jedoch vor, dass der metallische Grundkörper aus einem Stahl besteht, dessen Gefüge im Zuge der Durchführung der zweiten Vernetzungsreaktion eine Umwandlung und/oder Veränderung erfährt. Hierbei ändern sich insbesondere die Eigenschaften des metallischen Werkstoffs, wie zum Beispiel die Festigkeit oder Energieaufnahme. Beispielsweise können wärmhärtende Stahlwerkstoffe eingesetzt werden, die aus einer dehnbaren ferritischen Matrix mit darin eingelagerten harten martensitischen oder bainitischen Phasen bestehen. Die beiden Materialveränderungen "Phasenumwandlung des Metalls" und "Endvernetzung der Matrix" können also in einem gemeinsamen Prozessschritt durchgeführt werden, was Zeit und Energie spart.

Die eben erwähnte metallurgische Phasenumwandlung ist ausführlich beschrieben in "Structure and mechanical properties of dual phase steels", YIva Granbom, Doctoral thesis 2010, Royal Institute of Technology School of Industrial Engineering and Management SE-100 44 Stockholm, Sweden.

Stähle mit einer derartigen Gefügestruktur, welche die Nutzbarkeit dieses metallurgischen Effekts ermöglichen, werden Dualphasen-Stähle (DP) und kommerziell auch als bake-hardening-Stähle (BHZ) bezeichnet. Vorzugsweise werden also im Rahmen des hier beschriebenen Verfahrens ein metallischer Grundkörper bzw. ein Halbzeug aus einem bake-hardening-Stahl oder aus einem Dualphasen-Stahl eingesetzt, da die Festigkeit dieser Stähle ebenso wie die der zweistufig vernetzbare Polyurethanzusammensetzung in den beiden Wärmebehandlungsschritten gesteigert werden kann. BHZ- oder DP-Stähle werden von den großen Stahlerzeugern für den Karosseriebau kommerziell angeboten, wie etwa die Dualphasen-Stähle DP-W® und DP-K® von der ThyssenKrupp Steel Europe AG.

Wenn im Zug der Durchführung der zweiten Vernetzungsreaktion noch metallurgische Umwandlungen durchgeführt werden, sollten die zuvor in Gegenwart des metallischen Grundkörpers bzw. dessen Halbzeug durchgeführten Prozessschritte bei niedrigeren Temperaturen erfolgen, damit die metallurgische Veränderung/Umwandlung und die Endvernetzung der Matrix nicht verfrüht eintritt.

Demnach sieht eine bevorzugte Weiterbildung des Verfahrens es vor, dass das Anpressen des thermoplastischen Polymers an den Grundkörper bzw. dessen Halbzeug bei einer Temperatur von 20°C bis 25°C erfolgt. Diese Temperaturen liegen weit unter denen, bei denen die zweite Vernetzung und eine etwaige metallurgische Umwandung erfolgen. Diese Temperaturen entsprechen auch den normalen Raumtemperaturen in einer Fertigungshalle, sodass keine zusätzlichen Temperierungsmaßnahmen erforderlich sind. Insbesondere brauchen die hier beschriebenen Polyurethan-Prepregs vor dem Platzieren nicht auf Raumtemperatur aufgeheizt werden, da sie ja anders als Epoxid-Prepregs nicht gekühlt gelagert werden.

Unter der Maßgabe, dass ein Halbzeug des Grundkörpers bereit gestellt und mit anhaftendem thermoplastischen Polymer zum Grundkörper umgeformt wird, sollte das Umformen des Halbzeugs zum Grundkörper bei einer Temperatur von 20°C bis 150°C erfolgen, damit die zweite Vernetzungsreaktion nicht während des Umformens ausgelöst wird. Sofern das Halbzeug mit dem daran anhaftenden thermoplastischen Polymer noch zu kalt ist, wird das Halbzeug vor dem Umformen erwärmt bzw. ein beheiztes Umformwerkzeug verwendet.

Die eingesetzten Metallbleche können gegebenenfalls bereits mit einer Korrosionsschutzschicht versehen sein. In Betracht kommen galvanisch verzinkte Stahlbleche oder mit einem Lack auf Polyurethanbasis beschichtete Bleche. Es ist auch möglich, dass sich auf der Metalloberfläche noch Reste eines Tiefziehöls oder ähnlichen Substanzen befinden, die während des Umformprozesses eingesetzt werden. Die Haftung der erfindungsgemäßen Polyurethanzusammensetzung wird dadurch nicht wesentlich beeinträchtigt.

Das hier beschriebene Verfahren wird idealerweise auf verschiedene Betriebsstätten verteilt ausgeführt. Diese können durchaus zu unterschiedlichen Unternehmen gehören können und weit voneinander entfernt operieren. So kann ein Chemieunternehmen die reaktive Zusammensetzung bereitstellen und diese an einen Prepreg-Hersteller liefern. Dieser trägt die Zusammensetzung auf die Fasern auf, führt die erste Vernetzungsreaktion durch und konfektioniert ggf. noch das thermoplastische Polymer mit den eingebetteten Fasern. Das eigentliche Hybridbauteil kann dann bei einem dritten Hersteller geformt werden, indem dieser den metallische Grundkörper bzw. sein Halbzeug mit der Verstärkung versieht und ggf. noch umgeformt. Die zweite Vernetzungsreaktion kann dann noch in einem vierten Unternehmen erfolgen, welches die kathodische Tauchlackierung des Werkstückes durchführt und beim Einbrennen des Lacks die thermoplastische Matrix zum Duromer endvernetzt. Sofern der metallische Grundkörper bzw. dessen Halbzeug noch von einem Metallhersteller bereitgestellt wird, waren an der Durchführung des erfindungsgemäßen Verfahrens insgesamt fünf spezialisierte Unternehmen maßgeblich beteiligt. Daran zeigt sich, wie flexibel das vorliegende Verfahren durchzuführen ist.

Nach Durchführung des Verfahrens liegt ein Hybridbauteil vor, welches einen metallischen Grundkörper umfasst, welcher mit mindestens einer lokalen Versteifung aus einem Faserverbundwerkstoff versehen ist, wobei der Faserverbundwerkstoff eine auf Polyurethan basierende, duroplastische Matrix und darin eingebettete Fasern umfasst. Dieses Verfahrensprodukt ist ebenfalls Gegenstand der Erfindung.

Eine bevorzugte Weiterbildung sieht vor, dass die Versteifung des Hybridbauteils an einer Sichtseite mit einer nicht tragenden Verblendung versehen ist. Ein Hybridbauteil mit sichtseitiger Verblendung erhält man dadurch, dass die Verblendung - etwa eine Folie aus Metall oder Kunststoff - auf die noch thermoplastische Matrix aufgepresst wird. Sie hält darauf ohne weitere Fügemittel wie Schrauben oder Klebstoff. Die Verblendung kann zusammen mit der metallischen Grundkörper lackiert werden, zum Beispiel elektrophoretisch. Danach ist das Hybridbauteil nicht mehr als solches zu erkennen sondern wirkt auf den Betrachter rein metallisch.

Ein wesentlicher Gesichtspunkt der hier beschriebenen Erfindung ist, dass die Versteifung des metallischen Grundkörpers mit dem Faserverbundmaterial nicht vollflächig ist, sondern sich auf einen bewusst ausgewählten, begrenzten Bereich des metallischen Grundkörpers beschränkt. Die Versteifung befindet sich dort, wo im bestimmungsgemäßen Gebrauch des Hybridbauteils zumindest zeitweilig ein lokales Belastungsmaximum wirkt. Dies bedeutet, dass in unmittelbarer Umgebung der Versteifung, außerhalb des versteiften Bereiches, geringere mechanische Belastungen auf das Hybridbauteil einwirken als innerhalb des versteiften Bereiches. Gleichwohl bedeutet das nicht, dass der am stärksten beanspruchte Bereich des gesamten Hybridbauteils (globales Belastungsmaximum) in der Versteifung liegen muss. Sofern mehrere lokale Belastungsmaxima auftreten, sind entsprechend mehrere lokale Versteifungen vorzusehen. Liegen diese dicht beieinander, können sie auch von einer gemeinsamen Versteifung erfasst werden.

Die dahinter liegende Idee besteht darin, das Hybridbauteil so zu dimensionieren, dass zumindest ein stärker beanspruchter Bereich mit dem Faserverbundmaterial gezielt versteift wird, um Metall und damit Gewicht einzusparen (Leichtbau).

Die Gestalt, Lage und Ausrichtung der Versteifung hängt von der üblicherweise zu erwartenden Belastung des Hybridbauteils ab. Im Zuge der Konstruktion des Hybridbauteils ist es daher erforderlich, die im späteren Gebrauch auf das Hybridbauteil wirkenden Kräfte und Momente anzunehmen und daraus die Orte der lokalen Belastungsmaxima in dem Bauteil zu bestimmen. Diese Orte sind dann mit dem Faserverbundmaterial zu versteifen. Die Geometrie der Orte gibt letztendlich die Gestalt der Versteifung vor. Vorzugsweise werden die Fasern in Richtung des Kraftflusses durch den versteiften Bereich ausgerichtet. Das Auffinden der lokalen Belastungsmaxima gelingt computer-gestützt nach der Methode der finiten Elemente (FEM).

Da die vorgesehene Verwendung des Hybridbauteils dessen Versteifung determiniert, ist die Verwendung des Hybridbauteils dann erfindungsgemäß, wenn sie in einer Weise erfolgt, in der ein lokales Belastungsmaximum in der Versteifung wirkt.

Das Hybridbauteil wird vorzugsweise ausschließlich über den metallischen Grundkörper an benachbarte Bauteile oder Baugruppen angebunden, da die Anbindung an das Metall konstruktiv einfacher zu lösen ist als an den Faserverbundwerkstoff. Die Krafteinleitung in die Versteifung erfolgt mithin maßgeblich über die Kontaktfläche zwischen metallischem Grundkörper und Matrix und wird von der guten Metallhaftung der hier vorgeschlagenen Polyurethan-Zusammensetzung sichergestellt.

### Beispiele

Die Erfindung soll nun anhand von Beispielen erläutert werden.

In allen Versuchen wurden Kohlenstofffasern vom Typ Torayca FT 300 3K 200tex verarbeitet. Die Fasern lagen in einem Köpergewebe als textile Flächengebilde (Hersteller Engineered Cramer Composites (ECC), Typ Style e452) vor. Das Flächengewicht betrug 200 g/m².

Es wurden metallische Grundkörper in Form einer Miniatur-B-Säule verwendet, die von der Firma Benteler Automobiltechnik zur Verfügung gestellt wurden. Die metallischen Grundkörper bestehen aus einem warmumgeformten Stahl (22MnB5 Legierung) bzw. einer gut umformbaren Aluminiumlegierung.

In dem nicht erfindungsgemäßen Vergleichsbeispiel 0 wurde eine reaktive Polyurethan-Zusammensetzung gewählt, die gemäß Beispiel 2 der US2014087613A1 hergestellt wurde. Die Rezeptur ist in Tabelle 0 dargestellt. Da der Binder keine polare funktionale Gruppe aufweist, welche ausgewählt ist aus einer Ester-, Carbonat-, Amid-, Urethan-, Urea-, Thioester- oder Thiocarbonatfunktionalität, handelt es sich nicht um eine erfindungsgemäße Rezeptur.

Für das erfindungsgemäße Beispiel 1 wurde eine reaktive Zusammensetzung mit Rezeptur gemäß der Tabelle 1 eingesetzt.

**Tabelle 0: Rezeptur 0 der reaktiven Zusammensetzung in Vergleichsbeispiel 0**

| Bezeichnung | Einwaage / Gew.-% | Hersteller bzw Lieferant |
|---|---|---|
| Uretdiongruppenhaltiger Härter Vestagon B11604 (NCO-Gehalt: 7,7%) | 65,3 | Evonik Industries |
| Binder: vierfunktionelles Polyether Polyol 4640 (OHZ: 630 mg KOH/g) | 10,9 | Perstorp |
| Entgasungsmittel Benzoin | 0,2 | Aldrich |
| Butylacetat | 23,6 | Fluka |

**Tabelle 1: Rezeptur 1 der reaktiven Zusammensetzung in erfindungsgemäßem Beispiel 1**

| Bezeichnung | Einwaage / Gew.-% | Hersteller bzw Lieferant |
|---|---|---|
| Uretdiongruppenhaltiger Härter Vestagon BF 1320 (NCO-Gehalt: 14 %) | 27,7 | Evonik Industries |
| Bindemittel: vierfunktioneller Polyester Capa 4101 (OHZ: 224 mg KOH/g) | 21,2 | Perstorp |
| Oxirangruppenhaltiges Cobindemittel Epikote Resin 828 | 6,9 | Momentive |
| Aradur 3380 | 1,1 | Huntsman Advanced Materials |
| Additiv TegoWet 500 | 0,3 | Evonik Industries |
| Methylisobutylketon | 21,4 | Fluka |
| Isopropylacetat | 21,4 | Fluka |

Die Einsatzstoffe aus den Tabellen wurden jeweils mittels eines Dissolvers zu einer homogenen Lösung, der reaktiven Zusammensetzung, verarbeitet.

Zur Belegung des textilen Flächengebildes mit der reaktiven Zusammensetzung wurde das Kohlenstofffasergewebe mit der Lösung imprägniert und dann in einem Ofen bei 150°C für 10 Minuten getrocknet. Der Faservolumengehalt betrug 45 Volumenprozent.

Das dabei erhaltene thermoplastische Polymer mit den eingebetteten Fasern (Prepreg) wurde anschließend schätzungsweise drei Wochen bei 20°C gelagert. Sodann wurden jeweils vier Lagen auf ein Maß von 8 x 4 cm zugeschnitten und mit einer Laborpresse LaboPress P 400 S der Firma Vogt bei einer Temperatur von 150° und einem Druck von 3 bar (=3*10⁵ Pa) für 3 Minuten zu Stapeln verpresst. Nach dem Verpressen wurden die Stapel wieder auf 20°C abgekühlt.

Der aus Rezeptur 1 hergestellte Stapel ließ sich anschließend als lokales Verstärkungselement in die Miniatur-B-Säulen drapieren. Aufgrund der intrinsischen Klebrigkeit des Prepregs genügte ein Anpressen mit Handkraft ohne zusätzliche Vorbehandlung der Metalloberfläche, um eine ausreichende Haftung bei der weiteren Handhabung sowohl auf Stahl als auch auf Aluminium zu gewährleisten. Ein zusätzlicher Klebstoff wurde nicht verwendet. Beim Transport oder einer Drehung des Metallteils um 180° kam es dennoch zu keiner Ablösung. Das Werkstück mit dem darauf haftenden thermoplastischen Polymer wurde dann bei einer Temperatur von 200°C innerhalb von 30 Minuten in einem Ofen ohne zusätzliche Fixierung ausgehärtet. Die Haftung zum metallischen Grundkörper blieb hierbei erhalten, sodass ein lokal duroplastisch verstärktes Hybridbauteil entstand.

Die Haftung des aus Rezeptur 0 hergestellten Stapels war hingegen nicht ausreichend; das lokale Verstärkungspatch löste sich wieder von der Metalloberfläche ab.

Der Vergleich lehrt, dass nur die erfindungsgemäße Polyurethanformulierung zur lokalen Versteifung von Metallteilen geeignet ist.

In Beispiel 1 wurde als Cobindemittel Epikote Resin 828 (ein Epoxidharz) und als korrespondierender Härter Aradur 3380 (ein Epoxyhärter) verwendet. Im Folgenden wird gezeigt, dass auch ohne Verwendung von Cobindemittel und korrespondierendem Härter eine bessere Metallhaftung als im Stand der Technik (Beispiel 0) erzielt werden kann:

**Tabelle 2: Rezeptur 2 der reaktiven Zusammensetzung im erfindungsgemäßen Beispiel 2**

| Bezeichnung | Einwaage / Gew.-% | Hersteller bzw Lieferant |
|---|---|---|
| Uretdiongruppenhaltiger Härter Vestagon B11604 (NCO-Gehalt: 12.8 %) | 37 | Evonik Industries |
| Bindemittel: Polycaprolacton: Capa 3031 (OHZ: 560 mg KOH/g) | 13 | Perstorp |
| Lösemittel Methylisobutylketon | 25 | Fluka |
| Lösemittel Isopropylacetat | 25 | Fluka |

**Tabelle 3: Rezeptur 3 der reaktiven Zusammensetzung im erfindungsgemäßen Beispiel 3**

| Bezeichnung | Einwaage / Gew.-% | Hersteller bzw Lieferant |
|---|---|---|
| Uretdiongruppenhaltiger Härter Vestagon BF1320 (NCO-Gehalt: 14 %) | 33 | Evonik Industries |
| Bindemittel: Polycaprolacton: Capa 4101 (OHZ: 224 mg KOH/g) | 28 | Perstorp |
| Lösemittel Methylisobutylketon | 19.5 | Fluka |
| Lösemitttel Isopropylacetat | 19.5 | Fluka |

Zwecks Überprüfung der Metallhaftung wurden Zugscherfestigkeitsprüfungen gemäß DIN EN 1465 durchgeführt.

Die Prüfkörper wurden wie folgt hergestellt: Auf Metallstreifen aus Stahl DC04 ZE 75/75 bzw, aus Aluminium 6016 wurde je ein nicht ausreagiertes Laminat aus vier Lagen Prepreg aufgepresst und ausreagiert. Das Prepreg bestand aus den Rezepturen 0, 1, 2, 3 sowie jeweils Kohlenstofffasern Torayca FT 300 3K 200tex als Köpergewebe mit einem Flächengewicht von 200 g/m². Das Laminat wurde bei 2.5*10⁵ Pa und 150°C für 5 Minuten hergestellt, unter diesen Bedingungen kommt es zu keiner Vernetzungsreaktion. Das Aufpressen und Ausreagieren auf dem Metall erfolgte bei 200°C, 2.5*10⁵ Pa für 30 Minuten. Anschließend wurde der Aufbau in der Presse unter 2.5*10⁵ Pa Druck für weitere 30 Minuten bis auf Raumtemperatur abgekühlt.

Jeweils fünf Prüfkörper der untersuchten Materialkombinationen wurden geprüft und die gemessene Zugscherfestigkeit gemittelt. Die Versuchsergebnisse sind in Tabelle 4 dargelegt:

**Tabelle 4: Ergebnisse der Zugscherfestigkeitsprüfungen**

| **Versuch** | **Metall** | **Rezeptur** | **Zugscherfestigkeit** |
|---|---|---|---|
| I | Stahl | 0 | 0 MPa (nicht messbar) |
| II | Aluminium | 0 | 0.8 MPa |
| III | Stahl | 1 | 9.1 MPa |
| IV | Aluminium | 1 | 7.8 MPa |
| V | Aluminium | 2 | 4.3 MPa |
| VI | Aluminium | 3 | 1.6 MPa |

Die gemessenen Zugscherfestigkeiten nach DIN EN 1465 stellen ein aussagekräftiges Maß für die Metallhaftung dar. Demnach ist die Metallhaftung von Rezeptur 1 mit Cobindemittel und korrespondierendem Härter mit Abstand am größten (vgl. Versuche III und IV mit allen anderen Versuchen).

Aber auch Rezeptur 2, die ohne Cobindemittel und korrespondierendem Härter auskommt, haftet auf Aluminium deutlich besser als die aus dem Stand der Technik bekannte Rezeptur 0, die auf einem Polyether-Polyol basiert (vgl. Versuch V mit den Versuchen I und II).

## Patentansprüche

1. Verfahren zur Herstellung eines Hybridbauteils mit den folgenden Schritten:
a) Bereitstellen einer reaktiven Zusammensetzung zumindest enthaltend:
∘ mindestens einen Härter, bei welchem es sich um ein Uretdion handelt, dessen NCO-Funktionalität mindestens zwei beträgt,
∘ mindestens einen Binder, bei welchem es sich um eine Polyolverbindung handelt, dessen OH-Funktionalität drei bis sechs beträgt, und welcher mindestens eine polare funktionale Gruppe aufweist, welche ausgewählt ist aus einer Ester-, Carbonat-, Amid-, Urethan-, Urea-, Thioester- oder Thiocarbonatfunktionalität;
b) Bereitstellen von Fasern;
c) Belegen der Fasern mit der reaktiven Zusammensetzung;
d) Beaufschlagen zumindest der reaktiven Zusammensetzung mit Wärme zwecks Durchführung einer ersten Vernetzungsreaktion, im Zuge derer Härter und Binder zu einem thermoplastischen Polymer umgesetzt werden, wobei die Fasern in das thermoplastische Polymer eingebettet werden;
e) Bereitstellen eines metallischen Grundkörpers oder eines Halbzeugs desselben;
f) Platzieren des thermoplastischen Polymers mit den darin eingebetteten Fasern an einem lokal begrenzten Bereich des Grundkörpers bzw. dessen Halbzeugs;
g) Anpressen des thermoplastischen Polymers an den Grundkörper bzw. dessen Halbzeug, sodass die Fasern über das thermoplastische Polymer an dem Grundkörper bzw. dessen Halbzeug anhaften;
h) Umformen des Halbzeugs mit dem daran anhaftenden thermoplastischen Polymer zu dem metallischen Grundkörper, sofern in Schritt e) lediglich ein Halbzeug des Grundkörpers bereitgestellt wurde;
i) Beaufschlagen zumindest des thermoplastischen Polymers mit Wärme zwecks Durchführung einer zweiten Vernetzungsreaktion, im Zuge derer das thermoplastische Polymer zu einem duroplastischen Polymer umgesetzt wird;
k) Erhalt des Hybridbauteils umfassend zumindest den metallischen Grundkörper welcher mit mindestens einer lokalen Versteifung aus einem Faserverbundwerkstoff versehen ist, wobei der Faserverbundwerkstoff eine aus dem duroplastischen Polymer gebildete Matrix und darin eingebettet die Fasern umfasst.

2. Verfahren nach Anspruch 1, **dadurch gekennzeichnet, dass** das thermoplastische Polymer mit den darin eingebetteten Fasern schichtweise bereitgestellt wird, und dass die Schrittfolge:
f) Platzieren des thermoplastischen Polymers mit den darin eingebetteten Fasern an einem lokal begrenzten Bereich des Grundkörpers bzw. dessen Halbzeugs;
g) Anpressen des thermoplastischen Polymers an den Grundkörper bzw. dessen Halbzeug, sodass die Fasern über das thermoplastische Polymer an dem Grundkörper bzw. dessen Halbzeug anhaften;
entsprechend mehrfach durchgeführt wird, um das thermoplastische Polymer mit den darin eingebetteten Fasern schichtweise zu platzieren und anzupressen.

3. Verfahren nach Anspruch 1, **dadurch gekennzeichnet, dass** das thermoplastische Polymer mit den darin eingebetteten Fasern schichtweise bereitgestellt wird, dass die Schichten in Abwesenheit des Grundkörpers bzw. dessen Halbzeugs zu einem Stapel verpresst werden, und dass die Schrittfolge:
f) Platzieren des thermoplastischen Polymers mit den darin eingebetteten Fasern an einem lokal begrenzten Bereich des Grundkörpers bzw. dessen Halbzeugs;
g) Anpressen des thermoplastischen Polymers an den Grundkörper bzw. dessen Halbzeug, sodass die Fasern über das thermoplastische Polymer an dem Grundkörper bzw. dessen Halbzeug anhaften;
dadurch erfolgt, dass der Stapel auf den Grundkörper bzw. dessen Halbzeug platziert und angepresst wird.

4. Verfahren nach Anspruch 1 oder nach einem der Ansprüche 2 bis 3, **dadurch gekennzeichnet, dass** die zweite Vernetzungsreaktion bei einer Temperatur zwischen 160 °C und 220 °C durchgeführt wird.

5. Verfahren nach Anspruch 4, **dadurch gekennzeichnet, dass** der Grundkörper aus einem Stahl besteht, welcher im Zuge der Durchführung der zweiten Vernetzungsreaktion eine Veränderung und/oder Umlagerung seines Gefüges erfährt.

6. Verfahren nach Anspruch 1 oder einem der Ansprüche 2 bis 5, **dadurch gekennzeichnet, dass** das Platzieren und/oder das Anpressen des thermoplastischen Polymers an den Grundkörper bzw. dessen Halbzeug bei einer Temperatur von 20°C bis 25°C erfolgt.

7. Verfahren nach Anspruch 4 oder Anspruch 5 oder Anspruch 6, unter der Maßgabe, dass ein Halbzeug des Grundkörpers bereit gestellt und mit anhaftendem thermoplastischen Polymer zum Grundkörper umgeformt wird, **dadurch gekennzeichnet, dass** das Umformen des Halbzeugs zum Grundkörper bei einer Temperatur von 20°C bis 150°C erfolgt, erforderlichenfalls nach Erwärmen des Halbzeugs und/oder durch Verwendung eines beheizten Umformwerkzeugs.

8. Verfahren nach Anspruch 1 oder nach einem der Ansprüche 2 bis 7, **dadurch gekennzeichnet, dass** die erste Vernetzungsreaktion in Abwesenheit des metallischen Grundkörpers bzw. dessen Halbzeugs durchgeführt wird.

9. Verfahren nach Anspruch 8, **dadurch gekennzeichnet, dass** nach Durchführung der ersten Vernetzungsreaktion ein Zeitraum von einem Tag bis zu einem Jahr vergeht, bis die zweite Vernetzungsreaktion durchgeführt wird, und dass das thermoplastische Polymer mit den darin eingebetteten Fasern in diesem Zeitraum bei Temperaturen zwischen 15°C und 30°C gelagert und/oder transportiert wird.

10. Verfahren nach Anspruch 1 oder nach einem der Ansprüche 2 bis 9, **dadurch gekennzeichnet, dass** als Härter blockierungsmittelfreie Uretdione eingesetzt werden, welche hergestellt sind aus mindestens einer der folgenden Substanzen:
Isophorondiisocyanat (IPDI), Hexamethylendiisocyanat (HDI), Diisocyanatodicyclohexylmethan (H12MDI), 2-Methylpentandiisocyanat (MPDI), Gemische aus 2,2,4-Trimethylhexamethylendiisocyanat und 2,4,4- Trimethylhexamethylendiisocyanat (TMDI), Norbornandiisocyanat (NBDI).

11. Verfahren nach Anspruch 1 oder nach einem der Ansprüche 2 bis 10, **dadurch gekennzeichnet, dass** als Binder mindestens ein Polycaprolacton eingesetzt wird.

12. Verfahren nach Anspruch 1 oder einem der Ansprüche 2 bis 11, **dadurch gekennzeichnet, dass** als Binder mindestens ein Polyesterpolyol eingesetzt wird, dessen OH-Zahl zwischen 20 mg KOH / g und 500 mg KOH / g liegt, dessen Säurezahl höchstens 2 mg KOH / g beträgt und dessen molare Masse zwischen 100 g/mol und 5000 g/mol liegt.

13. Verfahren nach Anspruch 1 oder nach einem der Ansprüche 2 bis 12,
**dadurch gekennzeichnet, dass** die Zusammensetzung mindestens ein Cobindemittel enthält, wobei als Cobindemittel Epoxidharze eingesetzt werden, welche ausgewählt sind aus der Gruppe umfassend Epoxidharze auf Basis von Bisphenol A-diglycidylether, Epoxidharze auf Basis von Bisphenol F-diglycidylether und cycloaliphatische Typen wie beispielsweise 3,4-Epoxycyclohexyl-epoxyethan oder 3,4-Epoxycyclohexylmethyl-3,4-epoxy-cyclohexancarboxylat.

14. Verfahren nach Anspruch 13, **dadurch gekennzeichnet, dass** die Zusammensetzung einen mit dem Cobindemittel korrespondieren Härter enthält, welcher ausgewählt ist aus der Gruppe umfassend die folgenden Substanzklassen: Polycarbonsäuren, Polycarbonsäureanhydride, aliphatische Polyamine, zykloaliphatische Polyamine, Polyetheramine, Polymercaptane oder Polyamidoamine.

15. Verfahren nach Anspruch 1 oder nach einem der Ansprüche 2 bis 14,
**dadurch gekennzeichnet, dass** die Zusammensetzung frei ist von Substanzen, welche für die erste und/oder zweite Vernetzungsreaktion katalytisch wirken.

16. Verfahren nach Anspruch 1 oder nach einem der Ansprüche 2 bis 15,
**dadurch gekennzeichnet, dass** die Zusammensetzung in einem flüssigen Lösemittel bereitgestellt wird, wobei die Bestandteile der Zusammensetzung in dem Lösemittel gelöst und/oder suspendiert und/oder dispergiert sind, sodass das Belegen der Fasern mit der Zusammensetzung dadurch erfolgt, dass die Fasern mit dem Lösemittel und der darin gelösten bzw. suspendierten bzw. dispergierten Bestandteile imprägniert werden, und dass das Lösemittel im Zuge der Durchführung der ersten Vernetzungsreaktion zumindest teilweise aus den Fasern verdampft wird, wobei es sich bei dem Lösemittel um einen Ester oder um ein Keton oder um ein Gemisch handelt, welches mindestens einen Ester und/oder mindestens ein Keton enthält.

17. Verfahren nach Anspruch 1 oder nach einem der Ansprüche 2 bis 16, **dadurch gekennzeichnet, dass** das thermoplastische Polymer mit den darin eingebetteten Fasern ohne Verwendung eines zusätzlichen Klebstoffes an dem lokal begrenzten Bereich des Grundkörpers bzw. dessen Halbzeugs platziert wird.

18. Hybridbauteil umfassend einen metallischen Grundkörper, welcher mit mindestens einer lokalen Versteifung aus einem Faserverbundwerkstoff versehen ist, wobei der Faserverbundwerkstoff eine auf Polyurethan basierende, duroplastische Matrix und darin eingebettete Fasern umfasst, **dadurch gekennzeichnet, dass** das Hybridbauteil durch ein Verfahren nach Anspruch 1 oder nach einem der Ansprüche 2 bis 17 hergestellt ist.

19. Verwendung eines Hybridbauteils nach Anspruch 18 dergestalt, dass auf das Hybridbauteil im Bereich der Versteifung ein lokales Belastungsmaximum wirkt.

20. Verwendung nach Anspruch 19, bei welcher das Hybridbauteil ausschließlich über den metallischen Grundkörper an benachbarte Bauteile oder Baugruppen angebunden ist.

## Claims

1. Process for producing a hybrid component part comprising the steps of:
a) providing a reactive composition at least comprising:
∘ at least one hardener which is a uretdione having an NCO functionality of at least two,
∘ at least one binder which is a polyol compound having an OH functionality of 3 to 6 and which comprises at least one polar functional group selected from an ester, carbonate, amide, urethane, urea, thioester or thiocarbonate functionality;
b) providing fibres;
c) coating the fibres with the reactive composition;
d) exposing at least the reactive composition to heat to perform a first crosslinking reaction in the course of which hardener and binder are converted into a thermoplastic polymer, thus embedding the fibres into the thermoplastic polymer;
e) providing a metallic main body or a semifinished precursor thereof;
f) placing the thermoplastic polymer comprising the fibres embedded therein onto a localized area of the main body/semifinished precursor thereof;
g) pressing the thermoplastic polymer onto the main body/semifinished precursor thereof so that the fibres adhere to the main body/semifinished precursor thereof via the thermoplastic polymer;
h) forming the semifinished precursor comprising the thermoplastic polymer adherent thereto to afford the metallic main body provided that only a semifinished precursor of the main body was provided in step e);
i) exposing at least the thermoplastic polymer to heat to perform a second crosslinking reaction in the course of which the thermoplastic polymer is converted to a thermoset polymer;
k) obtaining the hybrid component part comprising at least the metallic main body provided with at least one local stiffening composed of a fibre composite material, wherein the fibre composite material comprises a matrix formed from the thermoset polymer and the fibres embedded therein.

2. Process according to Claim 1, **characterized in that** the thermoplastic polymer comprising the fibres embedded therein is provided in layerwise fashion and **in that** the sequence of steps of:
f) placing the thermoplastic polymer comprising the fibres embedded therein onto a localized area of the main body/semifinished precursor thereof;
g) pressing the thermoplastic polymer onto the main body/semifinished precursor thereof so that the fibres adhere to the main body/semifinished precursor thereof via the thermoplastic polymer;
is accordingly carried out repeatedly to place and press on in layerwise fashion the thermoplastic polymer comprising the fibres embedded therein.

3. Process according to Claim 1, **characterized in that** the thermoplastic polymer comprising the fibres embedded therein is provided in layerwise fashion, **in that** the layers are compressed to afford a stack in the absence of the main body/the semifinished precursor thereof and **in that** the sequence of steps of:
f) placing the thermoplastic polymer comprising the fibres embedded therein onto a localized area of the main body/semifinished precursor thereof;
g) pressing the thermoplastic polymer onto the main body/semifinished precursor thereof so that the fibres adhere to the main body/semifinished precursor thereof via the thermoplastic polymer;
is effected by placing and pressing the stack onto the main body/the semifinished precursor thereof.

4. Process according to Claim 1 or according to any of Claims 2 to 3, **characterized in that** the second crosslinking reaction is performed at a temperature between 160°C and 220°C.

5. Process according to Claim 4, **characterized in that** the main body is composed of a steel which in the course of performance of the second crosslinking reaction undergoes a change and/or rearrangement of its microstructure.

6. Process according to Claim 1 or any of Claims 2 to 5, **characterized in that** the placing and/or the pressing of the thermoplastic polymer onto the main body/the semifinished precursor thereof is effected at a temperature of 20°C to 25°C.

7. Process according to Claim 4 or Claim 5 or Claim 6 with the proviso that a semifinished precursor of the main body is provided and formed into the main body with adherent thermoplastic polymer, **characterized in that** the forming of the semifinished precursor into the main body is effected at a temperature of 20°C to 150°C, if necessary after heating of the semifinished precursor and/or by using a heated forming apparatus.

8. Process according to Claim 1 or according to any of Claims 2 to 7, **characterized in that** the first crosslinking reaction is performed in the absence of the metallic main body/the semifinished precursor thereof.

9. Process according to Claim 8, **characterized in that** after performance of the first crosslinking reaction a period of one day to one year elapses before the second crosslinking reaction is performed and **in that** the thermoplastic polymer comprising the fibres embedded therein is stored and/or transported at temperatures between 15°C and 30°C over this period.

10. Process according to Claim 1 or according to any of Claims 2 to 9, **characterized in that** as hardener uretdiones free from blocking agents are employed which are produced from at least one of the following substances:
isophorone diisocyanate (IPDI), hexamethylene diisocyanate (HDI), diisocyanatodicyclohexylmethane (H12MDI), 2-methylpentane diisocyanate (MPDI), mixtures of 2,2,4-trimethylhexamethylene diisocyanate and 2,4,4-trimethylhexamethylene diisocyanate (TMDI), and norbornane diisocyanate (NBDI).

11. Process according to Claim 1 or according to any of Claims 2 to 10, **characterized in that** as binder at least one polycaprolactone is employed.

12. Process according to Claim 1 or any of Claims 2 to 11, **characterized in that** as binder at least one polyester polyol is employed which has an OH number between 20 mg KOH / g and 500 mg KOH / g, an acid number of not more than 2 mg KOH / g and a molar mass between 100 g/mol and 5000 g/mol.

13. Process according to Claim 1 or according to any of Claims 2 to 12,
**characterized in that** the composition comprises at least one cobinder, wherein as cobinder epoxy resins are employed which are selected from the group comprising epoxy resins based on bisphenol A diglycidyl ether, epoxy resins based on bisphenol F diglycidyl ether and cycloaliphatic types, for example 3,4-epoxycyclohexylepoxyethane or 3,4-epoxycyclohexylmethyl-3,4-epoxycyclohexanecarboxylate.

14. Process according to Claim 13, **characterized in that** the composition comprises a hardener corresponding to the cobinder which is selected from the group comprising the following substance classes: polycarboxylic acids, polycarboxylic anhydrides, aliphatic polyamines, cycloaliphatic polyamines, polyetheramines, polymercaptans or polyamidoamines.

15. Process according to Claim 1 or according to any of Claims 2 to 14,
**characterized in that** the composition is free from substances that exhibit catalytic activity for the first and/or second crosslinking reaction.

16. Process according to Claim 1 or according to any of Claims 2 to 15,
**characterized in that** the composition is provided in a liquid solvent, wherein the constituents of the composition are dissolved and/or suspended and/or dispersed in the solvent so that the coating of the fibres with the composition is effected by impregnating the fibres with the solvent and **in that** the constituents dissolved/suspended/dispersed therein, and **in that** the solvent is at least partly evaporated from the fibres in the course of performance of the first crosslinking reaction, wherein the solvent is an ester or a ketone or a mixture comprising at least one ester and/or at least one ketone.

17. Process according to Claim 1 or according to any of Claims 2 to 16, **characterized in that** the thermoplastic polymer comprising the fibres embedded therein is placed at the localized region of the main body/the semifinished precursor thereof without the use of an additional adhesive.

18. Hybrid component part comprising a metallic main body provided with at least one local stiffening made of a fibre composite material, wherein the fibre composite material comprises a polyurethane-based thermoset matrix and fibres embedded therein, **characterized in that** the hybrid component part has been produced by a process according to Claim 1 or according to any of Claims 2 to 17.

19. Use of a hybrid component part according to Claim 18 such that a local stress maximum acts on the hybrid component part in the region of the stiffening.

20. Use according to Claim 19 where the hybrid component part is tethered to adjacent component parts or component assemblies exclusively via the metallic main body.

## Revendications

1. Procédé pour la fabrication d'une pièce hybride, présentant les étapes suivantes :
a) préparation d'une composition réactive contenant au moins :
- au moins un durcisseur, pour lequel il s'agit d'une uretdione, dont la fonctionnalité NCO est d'au moins deux,
- au moins un liant, pour lequel il s'agit d'un composé de type polyol, dont la fonctionnalité OH est de trois à six et qui présente au moins un groupe fonctionnel polaire, qui est choisi parmi une fonctionnalité ester, carbonate, amide, uréthane, urée, thioester ou thiocarbonate ;
b) préparation de fibres ;
c) recouvrement des fibres par la composition réactive ;
d) soumission d'au moins la composition réactive à de la chaleur en vue de réaliser une première réaction de réticulation, au cours de laquelle son durcisseur et son liant sont transformés en un polymère thermoplastique, les fibres étant enrobées dans le polymère thermoplastique ;
e) préparation d'un corps de base métallique ou d'un produit semi-fini de celui-ci ;
f) application du polymère thermoplastique pourvu des fibres enrobées en son sein sur une zone localement délimitée du corps de base ou de son produit semi-fini ;
g) pressage du polymère thermoplastique contre le corps de base ou son produit semi-fini, de telle sorte que les fibres adhèrent via le polymère thermoplastique au corps de base ou à son produit semi-fini ;
h) transformation du produit semi-fini présentant le polymère thermoplastique qui y adhère en corps de base métallique, pour autant que dans l'étape e) on n'ait préparé qu'un produit semi-fini du corps de base ;
i) soumission d'au moins le polymère thermoplastique à de la chaleur en vue de réaliser une deuxième réaction de réticulation, au cours de laquelle le polymère thermoplastique est transformé en un polymère thermodurcissable ;
k) obtention de la pièce hybride comprenant au moins le corps de base métallique qui est pourvu d'au moins un renfort local en un matériau composite fibreux, le matériau composite fibreux comprenant une matrice formée d'un polymère thermodurcissable et des fibres enrobées en son sein.

2. Procédé selon la revendication 1, **caractérisé en ce que** le polymère thermoplastique pourvu des fibres enrobées en son sein est préparé par couches et **en ce que** l'ordre des étapes :
f) application du polymère thermoplastique pourvu des fibres enrobées en son sein sur une zone localement délimitée du corps de base ou de son produit semi-fini ;
g) pressage du polymère thermoplastique contre le corps de base ou son produit semi-fini, de telle sorte que les fibres adhèrent via le polymère thermoplastique au corps de base ou à son produit semi-fini ;
est réalisé de manière correspondante plusieurs fois pour appliquer et presser par couches le polymère thermoplastique pourvu des fibres enrobées en son sein.

3. Procédé selon la revendication 1, **caractérisé en ce que** le polymère thermoplastique pourvu des fibres enrobées en son sein est préparé par couches, **en ce que** les couches, en l'absence du corps de base ou de son produit semi-fini, sont pressées en une pile et **en ce que** l'ordre des étapes :
f) application du polymère thermoplastique pourvu des fibres enrobées en son sein sur une zone localement délimitée du corps de base ou de son produit semi-fini ;
g) pressage du polymère thermoplastique contre le corps de base ou son produit semi-fini, de telle sorte que les fibres adhèrent via le polymère thermoplastique au corps de base ou à son produit semi-fini ;
a lieu **en ce que** la pile est appliquée et pressée sur le corps de base ou sur son produit semi-fini.

4. Procédé selon la revendication 1 ou selon l'une quelconque des revendications 2 à 3, **caractérisé en ce que** la deuxième réaction de réticulation est réalisée à une température entre 160°C et 220°C.

5. Procédé selon la revendication 4, **caractérisé en ce que** le corps de base est constitué par un acier qui subit une modification et/ou une conversion de sa structure au cours de la réalisation de la deuxième réaction de réticulation.

6. Procédé selon la revendication 1 ou selon l'une quelconque des revendications 2 à 5, **caractérisé en ce que** l'application et/ou le pressage du polymère thermoplastique sur le corps de base ou sur son produit semi-fini a lieu à une température de 20°C à 25°C.

7. Procédé selon la revendication 4 ou la revendication 5 ou la revendication 6, étant entendu qu'un produit semi-fini du corps de base est préparé et transformé avec le polymère thermoplastique qui y adhère en corps de base, **caractérisé en ce que** la transformation du produit semi-fini en corps de base a lieu à une température de 20°C à 150°C, si nécessaire après chauffage du produit semi-fini et/ou par l'utilisation d'un outil de formage chauffé.

8. Procédé selon la revendication 1 ou selon l'une quelconque des revendications 2 à 7, **caractérisé en ce que** la première réaction de réticulation est réalisée en l'absence du corps de base métallique ou de son produit semi-fini.

9. Procédé selon la revendication 8, **caractérisé en ce qu'**après la réalisation de la première réaction de réticulation, une période allant d'un jour à une année s'écoule jusqu'à ce qui la deuxième réaction de réticulation soit réalisée et **en ce que** le polymère thermoplastique pourvu des fibres enrobées en son sein est entreposé et/ou transporté pendant cette période à des températures entre 15°C et 30°C.

10. Procédé selon la revendication 1 ou selon l'une quelconque des revendications 2 à 9, **caractérisé en ce qu'**on utilise, comme durcisseur, des uretdiones exemptes d'agents de blocage, qui sont préparées à partir d'au moins l'une des substances suivantes :
diisocyanate d'isophorone (IPDI), diisocyanate d'hexaméthylène (HDI), diisocyanatodicyclohexylméthane (H12MDI), diisocyanate de 2-méthylpentane (MPDI), mélanges de diisocyanate de 2,2,4-triméthylhexaméthylène et de diisocyanate de 2,4,4-triméthylhexaméthylène (TMDI), diisocyanate de norbornane (NBDI).

11. Procédé selon la revendication 1 ou selon l'une quelconque des revendications 2 à 10, **caractérisé en ce qu'**on utilise, comme liant, au moins une polycaprolactone.

12. Procédé selon la revendication 1 ou selon l'une quelconque des revendications 2 à 11, **caractérisé en ce qu'**on utilise, comme liant, au moins un polyesterpolyol, dont l'indice d'OH se situe entre 20 mg de KOH/g et 500 mg de KOH/g, dont l'indice d'acide est d'au plus 2 mg de KOH/g et dont la masse molaire est située entre 100 g/mole et 5000 g/mole.

13. Procédé selon la revendication 1 ou selon l'une quelconque des revendications 2 à 12, **caractérisé en ce que** la composition contient au moins un co-liant, des résines époxyde étant utilisées comme co-liant, qui sont choisies dans le groupe comprenant les résines époxyde à base de bisphénol A-diglycidyléther, les résines époxyde à base de bisphénol F-diglycidyléther et les types cycloaliphatiques tels que par exemple le 3,4-époxycyclohexylépoxyéthane ou le carboxylate de 3,4-époxycyclohexylméthyl-3,4-époxycyclohexane.

14. Procédé selon la revendication 13, **caractérisé en ce que** la composition contient un durcisseur correspondant au co-liant, qui est choisi dans le groupe comprenant les classes de substances suivantes : poly(acides carboxyliques), poly(anhydrides d'acide carboxylique), polyamines aliphatiques, polyamines cycloaliphatiques, polyétheramines, polymercaptans ou polyamidoamines.

15. Procédé selon la revendication 1 ou selon l'une quelconque des revendications 2 à 14, **caractérisé en ce que** la composition est exempte de substances qui agissent de manière catalytique pour la première et/ou la deuxième réaction de réticulation.

16. Procédé selon la revendication 1 ou selon l'une quelconque des revendications 2 à 15, **caractérisé en ce que** la composition est préparée dans un solvant liquide, les constituants de la composition étant dissous et/ou mis en suspension et/ou dispersés dans le solvant de telle sorte que le recouvrement des fibres par la composition a lieu **en ce que** les fibres sont imprégnées du solvant et des constituants qui y sont dissous ou mis en suspension ou dispersés et **en ce que** le solvant est évaporé au moins partiellement hors des fibres au cours de la réalisation de la première réaction de réticulation, le solvant étant un ester ou une cétone ou un mélange qui contient au moins un ester et/ou au moins une cétone.

17. Procédé selon la revendication 1 ou selon l'une quelconque des revendications 2 à 16, **caractérisé en ce que** le polymère thermoplastique pourvu des fibres enrobées en son sein est appliqué sur la zone localement délimitée du corps de base ou de son produit semi-fini sans utiliser d'adhésif supplémentaire.

18. Pièce hybride comprenant un corps de base métallique, qui est pourvu d'au moins un renfort local en un matériau composite fibreux, le matériau composite fibreux comprenant une matrice thermodurcissable à base de polyuréthane et des fibres enrobées en son sein, **caractérisée en ce que** la pièce hybride est préparée par un procédé selon la revendication 1 ou selon l'une quelconque des revendications 2 à 17.

19. Utilisation d'une pièce hybride selon la revendication 18 de manière telle qu'un maximum local de sollicitation agit sur la pièce hybride au niveau du renfort.

20. Utilisation selon la revendication 19, dans laquelle la pièce hybride est exclusivement reliée via le corps de base métallique à des éléments ou des modules adjacents.
